# EUROPEAN PATENT APPLICATION

(11) **EP 4 822 802 A1**
(43) Date of publication of application: **14.10.2026**
(21) Application number: 25738779.5
(22) Date of filing: 08.01.2025
(51) Int. Cl.: H01M 10/0567, H01M 4/13, H01M 10/052, H01M 10/054, H01M 10/058, H01M 10/0568, H01M 10/0569

(54) **NONAQUEOUS ELECTROLYTE SOLUTION, NONAQUEOUS ELECTROLYTE BATTERY, AND METHOD FOR PRODUCING NONAQUEOUS ELECTROLYTE BATTERY**

(30) Priority: 12.01.2024 JP 2024003378
(71) Applicant: Central Glass Company, Limited, Ube-shi, Yamaguchi 755-0001 (JP)
(72) Inventor: KAWABATA, Wataru, Tokyo 101-0054 (JP); IWASAKI, Susumu, Tokyo 101-0054 (JP); MORI, Katsumasa, Tokyo 101-0054 (JP); KAWAHARA, Kei, Tokyo 101-0054 (JP); YAMAUCHI, Miyuki, Tokyo 101-0054 (JP); MATSUOKA, Riho, Tokyo 101-0054 (JP); NAKAHARA, Keita, Tokyo 101-0054 (JP)
(74) Representative: Manitz Finsterwald Patent- und Rechtsanwaltspartnerschaft mbB
(86) International application number: PCT/JP2025/000356
(87) International publication number: WO 2025/150511

(57) **Abstract**

A nonaqueous electrolyte solution containing (1) a solute, (II) a nonaqueous organic solvent, and (111) at least one compound selected from the group consisting of a compound represented by the following general formula (1) and a compound represented by the following general formula (2), a nonaqueous electrolyte solution battery containing the nonaqueous electrolyte solution, and a method for producing the nonaqueous electrolyte solution battery:

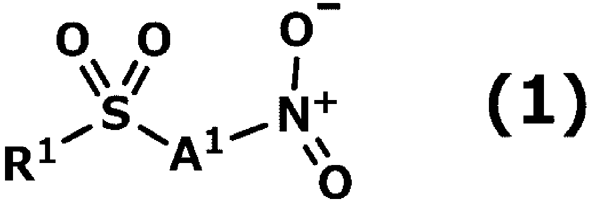

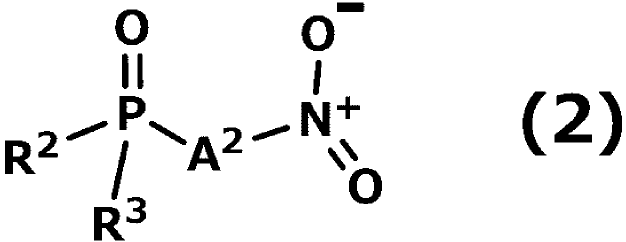

## Description

### TECHNICAL FIELD

The present disclosure relates to a nonaqueous electrolyte solution, a nonaqueous electrolyte solution battery, and a method for producing a nonaqueous electrolyte solution battery.

### BACKGROUND ART

In recent years, demand has been rapidly increasing for batteries having high capacity, high power output, and high energy density, for use not only in power storage systems for compact, high-energy-density applications such as information and communication devices including personal computers, video cameras, digital cameras, mobile phones, and smartphones but also as auxiliary power sources mountable on electric vehicles, hybrid vehicles, and fuel-cell vehicles. In addition, there is an increasing demand for batteries that can be used for a long period of time even in power storage systems for large and power applications such as power storage. Nonaqueous electrolyte solution batteries such as lithium ion batteries have been actively developed as candidates for these various power storage systems. A nonaqueous electrolyte solution battery generally includes a positive electrode, a negative electrode, and a nonaqueous electrolyte solution.

As measures for improving durability of a nonaqueous electrolyte solution battery, optimization of various constituents of the battery such as active materials of a positive electrode and a negative electrode has been hitherto studied. Techniques relating to a nonaqueous electrolyte solution have also been studied, and use of a variety of additives to prevent deterioration of a nonaqueous electrolyte solution due to decomposition of the electrolyte solution at surfaces of active positive and negative electrodes has been proposed.

PTL 1 discloses that when a nonaqueous electrolyte solution containing at least one of a dinitramide salt and a nitramide salt as a main electrolyte, an electrolyte additive, or an additive is used, the cycle characteristics are the same as the performance of lithium hexafluorophosphate, which is generally used as a main electrolyte. PTL 1 also discloses that application to a lithium sulfur battery improves charge and discharge efficiency and self-discharge characteristics.

### CITATION LIST

### PATENT LITERATURE

PTL 1:US2006-0154144A

### SUMMARY OF INVENTION

### TECHNICAL PROBLEM

However, the inventors of the present invention have intensively studied, and as a result found that there remains a need for improvement in high-temperature storage characteristics when a nonaqueous electrolyte solution containing lithium dinitramide used in Examples of PTL 1 is used for a nonaqueous electrolyte solution battery.

An object of the present disclosure is to provide a nonaqueous electrolyte solution capable of exhibiting excellent high-temperature storage characteristics in use of a nonaqueous electrolyte solution battery, and a method for producing the nonaqueous electrolyte solution battery. Another object of the present disclosure is to provide a nonaqueous electrolyte solution battery having excellent high-temperature storage characteristics.

### SOLUTION TO PROBLEM

[1] A nonaqueous electrolyte solution containing:
   (I) a solute,
   (II) a nonaqueous organic solvent, and
   (III) at least one compound selected from the group consisting of a compound represented by the following general formula (1) and a compound represented by the following general formula (2). 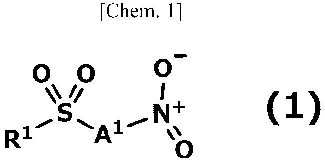
      [0007] In the general formula (1), A¹ represents -N(H)- or -N⁻(M₁⁺)-, M₁⁺ represents a metal cation or an onium cation, R¹ represents a halogen atom, an alkyl group having 1 to 10 carbon atoms, an alkoxy group having 1 to 10 carbon atoms, an alkenyl group having 2 to 10 carbon atoms, an alkenyloxy group having 2 to 10 carbon atoms, an alkynyloxy group having 2 to 10 carbon atoms, an aryloxy group having 6 to 15 carbon atoms, a hydroxyl group, O⁻ Mx⁺, or N(Rx)₂, Mx⁺ represents a metal cation or an onium cation, and each Rx independently represents a hydrogen atom, an alkyl group having 1 to 10 carbon atoms, an alkenyl group having 2 to 10 carbon atoms, an alkynyl group having 2 to 10 carbon atoms, or a fluorosulfonyl group, a plurality of Rx's may be the same as or different from each other, and the plurality of Rx's may be bonded to each other. 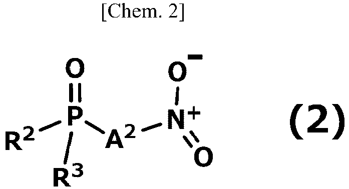
      [0009] In the general formula (2), A² represents -N(H)- or -N⁻(M₂⁺)-, M₂⁺ represents a metal cation or an onium cation, R² and R³ each independently represent a halogen atom, an alkyl group having 1 to 10 carbon atoms, an alkoxy group having 1 to 10 carbon atoms, an alkenyl group having 2 to 10 carbon atoms, an alkenyloxy group having 2 to 10 carbon atoms, an alkynyloxy group having 2 to 10 carbon atoms, an aryloxy group having 6 to 15 carbon atoms, a hydroxyl group, O⁻My⁺, or N(Ry)₂, My⁺ represents a metal cation or an onium cation, and each Ry independently represents a hydrogen atom, an alkyl group having 1 to 10 carbon atoms, an alkenyl group having 2 to 10 carbon atoms, an alkynyl group having 2 to 10 carbon atoms, or a fluorosulfonyl group, a plurality of Ry's may be the same as or different from each other, and the plurality of Ry's may be bonded to each other.
[2] The nonaqueous electrolyte solution according to [1], in which R¹ in the general formula (1) is a fluorine atom, a methyl group, an ethyl group, an ethenyl group, a methoxy group, O⁻Mx⁺, or N(Rx)₂.
[3] The nonaqueous electrolyte solution according to [1], in which at least one of R² or R³ in the general formula (2) represents a fluorine atom, a methyl group, an ethyl group, an ethenyl group, a methoxy group, O⁻My⁺, or N(RY)₂.
[4] The nonaqueous electrolyte solution according to [1] or [2], in which A¹ in the general formula (1) represents -N(H)- or -N⁻(Mᵢ⁺)-, and M₁⁺ represents a lithium ion or a sodium ion.
[5] The nonaqueous electrolyte solution according to [1] or [3], in which A² in the general formula (2) represents -N(H)- or -N⁻(M₂⁺)-, and M₂⁺ represents a lithium ion or a sodium ion.
[6] The nonaqueous electrolyte solution according to any one of [1] to [5], in which a concentration of the (III) is 0.01 to 10% by mass with respect to a total amount of the nonaqueous electrolyte solution.
[7] The nonaqueous electrolyte solution according to any one of [1] to [6], in which the (I) is at least one selected from the group consisting of LiPF₆, LiBF₄, LiSbF₆, LiAsF₆, LiClO₄, LiN(SO₂F)₂, LiAlO₂, LiAlCl₄, LiCl, and LiI.
[8] The nonaqueous electrolyte solution according to any one of [1] to [6], in which the (I) is at least one selected from the group consisting of NaPF₆, NaBF₄, NaSbF₆, NaAsF₆, NaClO₄, NaN(SO₂F)₂, NaAlO₂, NaAlCl₄, NaCl, and NaI.
[9] The nonaqueous electrolyte solution according to any one of [1] to [8], in which the (II) contains at least one selected from the group consisting of a cyclic ester, an acyclic ester, a cyclic ether, an acyclic ether, a sulfone compound, a sulfoxide compound, and an ionic liquid.
[10] The nonaqueous electrolyte solution according to [9], in which the cyclic ester contains a cyclic carbonate.
[11] The nonaqueous electrolyte solution according to [10], in which the cyclic carbonate contains at least one selected from the group consisting of ethylene carbonate and propylene carbonate.
[12] The nonaqueous electrolyte solution according to [9], in which the acyclic ester contains an acyclic carbonate.
[13] The nonaqueous electrolyte solution according to [12], in which the acyclic carbonate contains at least one selected from the group consisting of ethyl methyl carbonate, dimethyl carbonate, diethyl carbonate, and methyl propyl carbonate.
[14] The nonaqueous electrolyte solution according to [9], in which the cyclic ether contains at least one selected from the group consisting of tetrahydrofuran, 2-methyltetrahydrofuran, furan, tetrahydropyran, 1,3-dioxane, 1,4-dioxane, 1,3-dioxolane, and trioxane.
[15] The nonaqueous electrolyte solution according to [9], in which the acyclic ether contains at least one selected from the group consisting of diethyl ether, dipropyl ether, diisopropyl ether, dibutyl ether, dimethoxymethane, trimethoxymethane, 1,2-dimethoxyethane, diethoxyethane, diethylene glycol dimethyl ether, triethylene glycol dimethyl ether, and tetraethylene glycol dimethyl ether.
[16] The nonaqueous electrolyte solution according to any one of [1] to [15], further containing at least one selected from the group consisting of cyclohexylbenzene, cyclohexyl fluorobenzene, biphenyl, 2-fluorobiphenyl, tert-butylbenzene, tert-amylbenzene, 2-fluorotoluene, fluorobenzene, difluoroanisole, vinylene carbonate, an oligomer of vinylene carbonate (a number-average molecular weight in terms of polystyrene of 170 to 5,000), vinylethylene carbonate, divinylethylene carbonate, fluoroethylene carbonate, ethynyl ethylene carbonate, trans-difluoroethylene carbonate, methyl propargyl carbonate, ethyl propargyl carbonate, dipropargyl carbonate, dimethyl vinylene carbonate, dimethyl dicarbonate, bis(1,1,1,3,3,3-hexafluoro-1-propyl) carbonate, bis(2,2,2-trifluoroethyl) carbonate, 1,6-diisocyanatohexane, maleic anhydride, succinic anhydride, 1,4-dioxane-2,6-dione, glutaric anhydride, methanedisulfonic anhydride, 1,3-propanesultone, 1,3-propenesultone, 1,4-butanesultone, 2,4-butanesultone, 1,3,2-dioxathiolane-2,2-dioxide, 4-propyl-1,3,2-dioxathiolane-2,2-dioxide, methylene methanedisulfonate, dimethylene methanedisulfonate, trimethylene methanedisulfonate, methyl methanesulfonate, methanesulfonyl fluoride, ethenesulfonyl fluoride, 1,2-ethanedisulfonic anhydride, methanesulfonic anhydride, N,N'-carbonylbis(N-methylsulfamoyl fluoride), difluoro(picolinato)borate, phenyl difluorophosphate, tripropargyl phosphate, tetrafluoro(picolinato)phosphate, (ethoxy)pentafluorocyclotriphosphazene, succinonitrile, methyldifluorovinylsilane, methylfluorodivinylsilane, dimethyldivinylsilane, trivinylmethylsilane, trivinylfluorosilane, tetravinylsilane, tris(trimethylsilyl)borate, tris(trimethylsilyl)phosphate, 1,3-dimethyl-1,3-divinyl-1,3-di(1,1,1,3,3,3-hexafluoroisopropyl)disiloxane, a fluorosulfonate salt, a trifluoromethanesulfonate salt, a pentafluoroethanesulfonate salt, a nonafluorobutanesulfonate salt, a monomethyl sulfate salt, a monoethyl sulfate salt, a bis(trifluoromethanesulfonyl)imide salt, a bis(pentafluoroethanesulfonyl)imide salt, a (trifluoromethanesulfonyl)(nonafluorobutanesulfonyl)imide salt, a (trifluoromethanesulfonyl)(pentafluoroethanesulfonyl)imide salt, a (trifluoromethanesulfonyl)(fluorosulfonyl)imide salt, a (pentafluoroethanesulfonyl)(fluorosulfonyl)imide salt, a (difluorophosphoryl)(fluorosulfonyl)imide salt, a (difluorophosphoryl)(trifluoromethanesulfonyl)imide salt, a bis(difluorophosphoryl)imide salt, a monofluorophosphate salt, a difluorophosphate salt, a tetrafluoro(malonato)phosphate salt, a tris(oxalato)phosphate salt, a difluorobis(oxalato)phosphate salt, a tetrafluorooxalatophosphate salt, a bis(oxalato)borate salt, a difluorooxalatoborate salt, a difluoro(malonato)borate salt, a tris(trifluoromethanesulfonyl)methide salt, a tris(fluorosulfonyl)methide salt, an acrylate salt, a methacrylate salt, a nitrate salt, a nitrite salt, hexafluoroisopropanol, and trifluoroethanol.
[17] A nonaqueous electrolyte solution battery including, at least,
   a positive electrode,
   a negative electrode, and
   the nonaqueous electrolyte solution according to any one of [1] to [16].
[18] The nonaqueous electrolyte solution battery according to [17], in which the negative electrode contains at least one of an alkali metal, an alkali metal alloy, or a material capable of intercalating an alkali metal.
[19] A method for producing a nonaqueous electrolyte solution battery including a step of injecting the nonaqueous electrolyte solution according to any one of [1] to [16].

### ADVANTAGEOUS EFFECTS OF INVENTION

The present disclosure can provide a nonaqueous electrolyte solution capable of exhibiting excellent high-temperature storage characteristics in use of a nonaqueous electrolyte solution battery, and a method for producing the nonaqueous electrolyte solution battery. The present disclosure can provide a nonaqueous electrolyte solution battery having excellent high-temperature storage characteristics.

### DESCRIPTION OF EMBODIMENTS

The term "to" in the present description is used with the meanings including the numerical values indicated before and after "to" as a lower limit value and an upper limit value.

Hereinafter, the present disclosure will be described in detail, but the description of the constituent elements described below is an example of an embodiment of the present disclosure, and the present disclosure is not limited to these specific contents.

### 1. Nonaqueous Electrolyte Solution

A nonaqueous electrolyte solution of the present disclosure contains (1) a solute, (II) a nonaqueous organic solvent, and (III) at least one compound selected from the group consisting of a compound represented by the following general formula (1) and a compound represented by the following general formula (2).

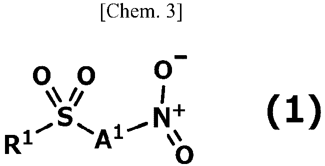

In the general formula (1), A¹ represents -N(H)- or -N⁻(M₁⁺)-, M₁⁺ represents a metal cation or an onium cation, R¹ represents a halogen atom, an alkyl group having 1 to 10 carbon atoms, an alkoxy group having 1 to 10 carbon atoms, an alkenyl group having 2 to 10 carbon atoms, an alkenyloxy group having 2 to 10 carbon atoms, an alkynyloxy group having 2 to 10 carbon atoms, an aryloxy group having 6 to 15 carbon atoms, a hydroxyl group, O⁻ Mx⁺, or N(Rx)₂, Mx⁺ represents a metal cation or an onium cation, and each Rx independently represents a hydrogen atom, an alkyl group having 1 to 10 carbon atoms, an alkenyl group having 2 to 10 carbon atoms, an alkynyl group having 2 to 10 carbon atoms, or a fluorosulfonyl group, a plurality of Rx's may be the same as or different from each other, and the plurality of Rx's may be bonded to each other.

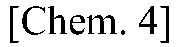

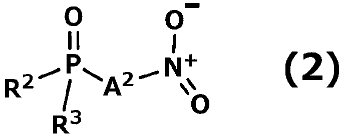

In the general formula (2), A² represents -N(H)- or -N⁻(M₂⁺)-, M₂⁺ represents a metal cation or an onium cation, R² and R³ each independently represent a halogen atom, an alkyl group having 1 to 10 carbon atoms, an alkoxy group having 1 to 10 carbon atoms, an alkenyl group having 2 to 10 carbon atoms, an alkenyloxy group having 2 to 10 carbon atoms, an alkynyloxy group having 2 to 10 carbon atoms, an aryloxy group having 6 to 15 carbon atoms, a hydroxyl group, O⁻My⁺, or N(Ry)₂, My⁺ represents a metal cation or an onium cation, and each Ry independently represents a hydrogen atom, an alkyl group having 1 to 10 carbon atoms, an alkenyl group having 2 to 10 carbon atoms, an alkynyl group having 2 to 10 carbon atoms, or a fluorosulfonyl group, a plurality of Ry's may be the same as or different from each other, and the plurality of Ry's may be bonded to each other.

### <(1) Solute>

The (I) solute (also referred to as "(I)") contained in the nonaqueous electrolyte solution of the present disclosure will be described.

As the solute (I), various solutes that have been employed in the field of such a nonaqueous electrolyte solution can be employed without particular restriction. Such a solute is preferably an ionic salt composed of a pair of a cation and an anion and is not particularly limited as long as the solute is present in an ionic state as a cation and an anion in a nonaqueous organic solvent, and various solutes can be used.

The solute is preferably, for example, an ionic salt composed of a pair of at least one cation selected from the group consisting of alkali metal ions such as a lithium ion and a sodium ion, an alkaline earth metal ion, and quaternary ammonium, and at least one anion selected from the group consisting of a hexafluorophosphate anion, a tetrafluoroborate anion, a hexafluoroantimonate anion, a hexafluoroarsenate anion, a perchlorate anion, a bis(fluorosulfonyl)imide anion, an aluminate anion, a tetrachloroaluminate anion, a chloride ion, and an iodide ion.

Suitable examples of the solute specifically include at least one selected from the group consisting of LiPF₆, LiBF₄, LiSbF₆, LiAsF₆, LiClO₄, LiN(SO₂F)₂, LiAlO₂, LiAlCl₄, LiCl, and LiI or at least one selected from the group consisting of NaPF₆, NaBF₄, NaSbF₆, NaAsF₆, NaClO₄, NaN(SO₂F)₂, NaAlO₂, NaAlCl₄, NaCl, and NaI.

Of these, in view of energy density, output characteristics, life, and the like of the nonaqueous electrolyte solution battery, the cation is preferably at least one selected from the group consisting of a lithium ion, a sodium ion, a potassium ion, a magnesium ion, and a quaternary ammonium cation, and the anion is preferably at least one selected from the group consisting of a hexafluorophosphate anion, a tetrafluoroborate anion, and a bis(fluorosulfonyl)imide anion.

In the nonaqueous electrolyte solution of the present disclosure, as (I), one type of compound may be used alone, or two or more types of compounds may be mixed and used in any combination at any ratio according to the application.

The concentration of (I) with respect to the total amount of the nonaqueous electrolyte solution is not particularly restricted. For example, the lower limit of the concentration of (I) may be 0.5 mol/L or more, 0.7 mol/L or more, or 0.9 mol/L or more. The upper limit of the concentration of (I) may be 5 mol/L or less, 4 mol/L or less, or 2 mol/L or less. The solute concentration is preferably 0.5 mol/L or more because the ionic conductivity hardly decreases, and the cycle characteristic and the output characteristic of the nonaqueous electrolyte solution battery hardly deteriorates. On the other hand, the solute concentration is preferably 5 mol/L or less because the viscosity of the nonaqueous electrolyte solution hardly increases, and the ionic conductivity hardly decreases. Here, when two or more types of solutes are used as (1), the total concentration of the solutes is preferably within the above range.

The liquid temperature for dissolving (1) in (II) a nonaqueous organic solvent is not particularly limited, but may be -20 to 80°C or 0 to 60°C.

Moreover, the cation of the solute is more preferably a lithium ion for use for a lithium ion battery application and is more preferably a sodium ion for use for a sodium ion battery application.

### <(II) Nonaqueous Organic Solvent>

The (II) nonaqueous organic solvent (also referred to as "(II)") contained in the nonaqueous electrolyte solution of the present disclosure will be described. The type of the (II) nonaqueous organic solvent is not particularly limited, and any nonaqueous organic solvent can be used. Such a nonaqueous organic solvent preferably contains at least one selected from the group consisting of a cyclic ester, an acyclic ester, a cyclic ether, an acyclic ether, a sulfone compound, a sulfoxide compound, an amide compound, a nitrile compound, and an ionic liquid, and more preferably contains at least one selected from the group consisting of a cyclic ester, an acyclic ester, a cyclic ether, an acyclic ether, a sulfone compound, a sulfoxide compound, and an ionic liquid. Here, the cyclic carbonate is a subordinate concept of the cyclic ester, and the acyclic carbonate is a subordinate concept of the acyclic ester.

Specific examples of the (II) nonaqueous organic solvent include the following nonaqueous organic solvents.

Examples of the cyclic ester include cyclic carbonates such as propylene carbonate (hereinafter, sometimes referred to as "PC"), ethylene carbonate (hereinafter, sometimes referred to as "EC"), and butylene carbonate, as well as γ-butyrolactone and γ-valerolactone.

Examples of the acyclic ester include acyclic carbonates such as diethyl carbonate (hereinafter, sometimes referred to as "DEC"), dimethyl carbonate (hereinafter, sometimes referred to as "DMC"), ethyl methyl carbonate (hereinafter, sometimes referred to as "EMC"), methyl propyl carbonate, ethyl propyl carbonate, methyl butyl carbonate, 2,2,2-trifluoroethyl methyl carbonate, 2,2,2-trifluoroethyl ethyl carbonate, 2,2,2-trifluoroethyl propyl carbonate, 1,1,1,3,3,3-hexafluoro-1-propyl methyl carbonate, 1,1,1,3,3,3-hexatIuoro-1-propyl ethyl carbonate, and 1,1,1,3,3,3-hexafluoro-1-propyl propyl carbonate, methyl acetate, ethyl acetate, methyl propionate, ethyl propionate (hereinafter sometimes referred to as "EP"), methyl 2-fluoropropionate, and ethyl 2-fluoropropionate.

Examples of the cyclic ether include tetrahydrofuran, 2-methyltetrahydrofuran, furan, tetrahydropyran, 1,3-dioxane, 1,4-dioxane, 1,3-dioxolane, and trioxane.

Examples of the acyclic ether include diethyl ether, dipropyl ether, diisopropyl ether, dibutyl ether, dimethoxymethane, trimethoxymethane, 1,2-dimethoxyethane, diethoxyethane, diethylene glycol dimethyl ether, triethylene glycol dimethyl ether, and tetraethylene glycol dimethyl ether.

In addition, examples include sulfone compounds and sulfoxide compounds, such as dimethyl sulfoxide and sulfolane, N,N-dimethylformamide, acetonitrile, and propionitrile. In addition, an ionic liquid and the like can also be exemplified.

The (II) nonaqueous organic solvent may contain at least one selected from the group consisting of a cyclic ester, an acyclic ester, a cyclic ether, an acyclic ether, a sulfone compound, a sulfoxide compound, and an ionic liquid.

The cyclic ester may contain a cyclic carbonate, and the cyclic carbonate may contain at least one selected from the group consisting of ethylene carbonate and propylene carbonate.

The acyclic ester may contain an acyclic carbonate, and the acyclic carbonate may contain at least one selected from the group consisting of ethyl methyl carbonate, dimethyl carbonate, diethyl carbonate, and methyl propyl carbonate.

The cyclic ether may contain at least one selected from the group consisting of tetrahydrofuran, 2-methyltetrahydrofuran, furan, tetrahydropyran, 1,3-dioxane, 1,4-dioxane, 1,3-dioxolane, and trioxane.

The acyclic ether may contain at least one selected from the group consisting of diethyl ether, dipropyl ether, diisopropyl ether, dibutyl ether, dimethoxymethane, trimethoxymethane, 1,2-dimethoxyethane, diethoxyethane, diethylene glycol dimethyl ether, triethylene glycol dimethyl ether, and tetraethylene glycol dimethyl ether.

In the nonaqueous electrolyte solution of the present disclosure, as (II), one type of compound may be used alone, or two or more types of compounds may be mixed and used in any combination at any ratio according to the application. Of these, from the viewpoint of the electrochemical stability against oxidation and reduction thereof and the chemical stability relating to heat or the reaction with the solute, in particular, at least one selected from the group consisting of PC, EC, DEC, DMC, and EMC is preferably contained.

For example, one or more types of cyclic carbonates having high permittivity and one or more types of acyclic carbonates or acyclic esters having low liquid viscosity are preferably contained as the nonaqueous organic solvents because the ionic conductivity of the electrolyte solution is increased. Specifically, one containing any of the following combinations is more preferred.
(1) A combination of EC and EMC,
(2) a combination of EC and DEC,
(3) a combination of EC, DMC, and EMC,
(4) a combination of EC, DEC, and EMC,
(5) a combination of EC, EMC, and EP,
(6) a combination of PC and DEC,
(7) a combination of PC and EMC,
(8) a combination of PC and EP,
(9) a combination of PC, DMC, and EMC,
(10) a combination of PC, DEC, and EMC,
(11) a combination of PC, DEC, and EP,
(12) a combination of PC, EC, and EMC,
(13) a combination of PC, EC, DMC, and EMC,
(14) a combination of PC, EC, DEC, and EMC, and
(15) a combination of PC, EC, EMC, and EP.

The concentration of the nonaqueous organic solvent in the present disclosure is not particularly limited as long as the nonaqueous organic solvent has a function as a nonaqueous organic solvent, but the concentration may be, for example, 40 to 99% by mass, preferably 50 to 95% by mass, and particularly preferably 70 to 93% by mass with respect to the total amount (100% by mass) of the nonaqueous electrolyte solution.

The cyclic carbonate content is not particularly restricted and is any content as long as the effects of the present disclosure are not significantly impaired, but the content in the case where one type is used alone may be 3% by volume or more, and preferably 5% by volume or more in 100% by volume of the nonaqueous organic solvent. Within this range, a decrease in electric conductivity resulting from a decrease in permittivity of the nonaqueous electrolyte solution is avoided, and the large current discharge characteristics, the stability with respect to the negative electrode, and the cycle characteristics of the nonaqueous electrolyte solution battery are easily set in favorable ranges. The content may be 90% by volume or less, preferably 85% by volume or less, and more preferably 80% by volume or less. Within this range, the viscosity of the nonaqueous electrolyte solution can be maintained within an appropriate range, a decrease in ionic conductivity can be suppressed, and thus the load characteristics of the nonaqueous electrolyte solution battery is easily set in a favorable range.

Moreover, two or more types of cyclic carbonates can be used in any combination. One of preferable combinations is a combination of ethylene carbonate and propylene carbonate. In this case, the volume ratio of ethylene carbonate to propylene carbonate is preferably 99:1 to 40:60 and particularly preferably 95:5 to 50:50. Further, the amount of propylene carbonate in the entire nonaqueous organic solvent is not particularly restricted and is any amount as long as the effects of the present disclosure are not significantly impaired, but the amount may be 1% by volume or more, preferably 2% by volume or more, and more preferably 3% by volume or more, and may be 30% by volume or less, preferably 25% by volume or less, and more preferably 20% by volume or less. Propylene carbonate is preferably contained within this range because, for example, in a combination of ethylene carbonate and a dialkyl carbonate, the low-temperature characteristics are more excellent while maintaining the characteristics of the combination of ethylene carbonate and a dialkyl carbonate.

One type of acyclic ester may be used alone, or two or more types thereof may be used in any combination and at any ratio.

The acyclic ester content is not particularly limited, but may be 15% by volume or more, preferably 20% by volume or more, and more preferably 25% by volume or more, and may be 90% by volume or less, preferably 85% by volume or less, and more preferably 80% by volume or less, with respect to 100% by volume of the nonaqueous organic solvent. When the acyclic ester content is within the above range, the viscosity of the nonaqueous electrolyte solution is set in an appropriate range, a decrease in ionic conductivity is suppressed, and thus the input/output characteristics and the charge-discharge rate characteristics of the nonaqueous electrolyte solution battery are easily set in favorable ranges. In addition, a decrease in electric conductivity resulting from a decrease in permittivity of the nonaqueous electrolyte solution is avoided, and the input/output characteristics and the charge/discharge rate characteristics of the nonaqueous electrolyte solution battery are easily set in favorable ranges.

Further, by combining ethylene carbonate with a specific acyclic ester in a specific content, the battery performance can be significantly improved.

For example, when dimethyl carbonate, ethyl methyl carbonate, or a mixture of dimethyl carbonate and ethyl methyl carbonate is selected as a specific acyclic ester, the ethylene carbonate content is not particularly restricted and is any content as long as the effects of the present disclosure are not significantly impaired, but the content may be 5% by volume or more and preferably 10% by volume or more, and may be 45% by volume or less and preferably 40% by volume or less. The dimethyl carbonate content may be 20% by volume or more and preferably 30% by volume or more, and may be 50% by volume or less and preferably 45% by volume or less. The ethyl methyl carbonate content may be 20% by volume or more and preferably 30% by volume or more, and may be 50% by volume or less and preferably 45% by volume or less. When the contents are within the above ranges, the viscosity of the nonaqueous electrolyte solution is decreased while the low-temperature precipitation temperature of the electrolyte is decreased, the ionic conductivity is improved, and high input/output is easily obtained even at a low temperature.

The acyclic ether content is not particularly restricted and is any content as long as the effects of the present disclosure are not significantly impaired, but the content may be 1% by volume or more, preferably 2% by volume or more, and more preferably 3% by volume or more, and may be 30% by volume or less, preferably 25% by volume or less, and more preferably 20% by volume or less in 100% by volume of the nonaqueous organic solvent. When the acyclic ether content is within the above range, it is easy to secure the effect of improving the ionic conductivity of the acyclic ether due to improvement in lithium ion dissociation degree and a decrease in viscosity, for example, in the case of a lithium ion battery in which a cation is mainly lithium. When the negative electrode active material is a carbonaceous material, the phenomenon in which the acyclic ether is co-intercalated with lithium ions can be suppressed, and thus the input/output characteristics and the charge-discharge rate characteristics are easily set in appropriate ranges.

The sulfone compound content is not particularly restricted and is any content as long as the effects of the present disclosure are not significantly impaired, but the content may be 0.3% by volume or more, preferably 0.5% by volume or more, and more preferably 1% by volume or more, and may be 40% by volume or less, preferably 35% by volume or less, and more preferably 30% by volume or less in 100% by volume of the nonaqueous organic solvent. When the sulfone compound content is within the above range, the effect of improving the durability such as the cycle characteristics and the storage characteristics is easily obtained, the viscosity of the nonaqueous electrolyte solution can be set in an appropriate range, a decrease in electric conductivity can be avoided, and the input/output characteristics and the charge-discharge rate characteristics of the nonaqueous electrolyte solution battery are easily set in appropriate ranges.

### <(III) Compound>

(III) At least one compound selected from the group consisting of a compound represented by the following general formula (1) and a compound represented by the following general formula (2) (also referred to as "(III)") contained in the nonaqueous electrolyte solution of the present disclosure will be described.

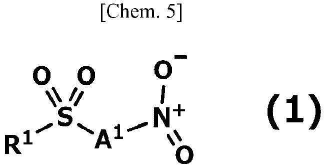

In the general formula (1), A¹ represents -N(H)- or -N⁻(M₁⁺)-, M₁⁺ represents a metal cation or an onium cation, R¹ represents a halogen atom, an alkyl group having 1 to 10 carbon atoms, an alkoxy group having 1 to 10 carbon atoms, an alkenyl group having 2 to 10 carbon atoms, an alkenyloxy group having 2 to 10 carbon atoms, an alkynyloxy group having 2 to 10 carbon atoms, an aryloxy group having 6 to 15 carbon atoms, a hydroxyl group, O⁻ Mx⁺, or N(Rx)₂, Mx⁺ represents a metal cation or an onium cation, and each Rx independently represents a hydrogen atom, an alkyl group having 1 to 10 carbon atoms, an alkenyl group having 2 to 10 carbon atoms, an alkynyl group having 2 to 10 carbon atoms, or a fluorosulfonyl group, a plurality of Rx's may be the same as or different from each other, and the plurality of Rx's may be bonded to each other.

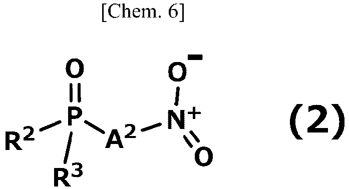

In the general formula (2), A² represents -N(H)- or -N⁻(M₂⁺)-, M₂⁺ represents a metal cation or an onium cation, R² and R³ each independently represent a halogen atom, an alkyl group having 1 to 10 carbon atoms, an alkoxy group having 1 to 10 carbon atoms, an alkenyl group having 2 to 10 carbon atoms, an alkenyloxy group having 2 to 10 carbon atoms, an alkynyloxy group having 2 to 10 carbon atoms, an aryloxy group having 6 to 15 carbon atoms, a hydroxyl group, O⁻My⁺, or N(Ry)₂, My⁺ represents a metal cation or an onium cation, and each Ry independently represents a hydrogen atom, an alkyl group having 1 to 10 carbon atoms, an alkenyl group having 2 to 10 carbon atoms, an alkynyl group having 2 to 10 carbon atoms, or a fluorosulfonyl group, a plurality of Ry's may be the same as or different from each other, and the plurality of Ry's may be bonded to each other.

The compound represented by the general formula (1) will be described.

In the general formula (1), A¹ represents -N(H)- or -N⁻(M₁⁺)-.

M₁⁺ represents a metal cation or an onium cation. Examples of the metal cation include alkali metal ions and alkaline earth metal ions, and specific examples thereof include a lithium ion, a sodium ion, a potassium ion, and a magnesium ion. Examples of the onium cation include a quaternary ammonium cation.

In one preferable embodiment, in the general formula (1), A¹ represents -N(H)- or -N⁻(M₁⁺)-, and M₁⁺ represents a lithium ion or a sodium ion.

In the general formula (1), R¹ represents a halogen atom, an alkyl group having 1 to 10 carbon atoms, an alkoxy group having 1 to 10 carbon atoms, an alkenyl group having 2 to 10 carbon atoms, an alkenyloxy group having 2 to 10 carbon atoms, an alkynyloxy group having 2 to 10 carbon atoms, an aryloxy group having 6 to 15 carbon atoms, a hydroxyl group, O⁻Mx⁺, or N(Rx)₂.

The alkyl group having 1 to 10 carbon atoms represented by R¹ may be linear or branched-chain, and preferably has 1 to 5 carbon atoms. Examples of such an alkyl group include a methyl group, an ethyl group, an n-propyl group, an isopropyl group, an n-butyl group, a sec-butyl group, a tert-butyl group, an n-pentyl group, an n-hexyl group, an n-octyl group, and an n-decyl group. The alkyl group having 1 to 10 carbon atoms preferably has no substituents (that is, is preferably an unsubstituted alkyl group having 1 to 10 carbon atoms).

The alkoxy group having 1 to 10 carbon atoms represented by R¹ may be linear or branched-chain, and preferably has 1 to 5 carbon atoms. Examples of such an alkoxy group include a methoxy group, an ethoxy group, an n-propyloxy group, an isopropyloxy group, an n-butyloxy group, a sec-butyloxy group, a tert-butyloxy group, an n-pentyloxy group, an n-hexyloxy group, an n-octyloxy group, and an n-decyloxy group. The alkoxy group having 1 to 10 carbon atoms may have a substituent.

Examples of the alkenyl group having 2 to 10 carbon atoms represented by R¹ include a linear or branched alkenyl group, and an alkenyl group having 2 to 5 carbon atoms is preferred. Moreover, the alkenyl group may have two or more unsaturated bonds. Suitable examples of such an alkenyl group include a vinyl group, a 1-propenyl group, a 2-propenyl group, a 1-methylvinyl group, a 1-butenyl group, a 2-butenyl group, a 3-butenyl group, a 1-methylpropenyl group, a 1-pentenyl group, and a 1,3-butadienyl group. The alkenyl group having 2 to 10 carbon atoms may have a substituent.

Examples of the alkenyloxy group having 2 to 10 carbon atoms represented by R¹ include a linear or branched alkenyloxy group, and an alkenyloxy group having 2 to 5 carbon atoms is preferred. Moreover, the alkenyloxy group may have two or more unsaturated bonds. Suitable examples of such an alkenyloxy group include a vinyloxy group, a 1-propenyloxy group, a 2-propenyloxy group, a 1-methylvinyloxy group, a 1-butenyloxy group, a 2-butenyloxy group, a 3-butenyloxy group, a 1-methylpropenyloxy group, a 1-pentenyloxy group, and a 1,3-butadienyloxy group. The alkenyloxy group having 2 to 10 carbon atoms may have a substituent.

Examples of the alkynyloxy group having 2 to 10 carbon atoms represented by R¹ include a linear or branched alkynyloxy group, and an alkynyloxy group having 2 to 5 carbon atoms is preferred. Moreover, the alkynyloxy group may have two or more unsaturated bonds. Suitable examples of such an alkynyloxy group include an ethynyloxy group, a 1-propynyloxy group, a 2-propynyloxy group, a 1-methylethynyloxy group, a 1-butynyloxy group, a 2-butynyloxy group, a 3-butynyloxy group, a 1-methylpropynyloxy group, and a 1-pentynyloxy group. The alkynyloxy group having 2 to 10 carbon atoms may have a substituent.

Suitable examples of the aryloxy group having 6 to 15 carbon atoms represented by R¹ include a phenyloxy group and a naphthyloxy group. Moreover, the aryloxy group also includes those having a linking group such as a methylene group, and suitable examples thereof include a benzyloxy group. The aryloxy group having 6 to 15 carbon atoms may have a substituent.

In one preferable embodiment, R¹ is a fluorine atom, a methyl group, an ethyl group, an ethenyl group, a methoxy group, O⁻Mx⁺, or N(Rx)₂.

Mx⁺ represents a metal cation or an onium cation. Examples of the metal cation include alkali metal ions and alkaline earth metal ions, and specific examples thereof include a lithium ion, a sodium ion, a potassium ion, and a magnesium ion. Examples of the onium cation include a quaternary ammonium cation.

Each Rx independently represents a hydrogen atom, an alkyl group having 1 to 10 carbon atoms, an alkenyl group having 2 to 10 carbon atoms, an alkynyl group having 2 to 10 carbon atoms, or a fluorosulfonyl group.

The alkyl group having 1 to 10 carbon atoms represented by Rx may be linear or branched-chain, and preferably has 1 to 5 carbon atoms. Examples of such an alkyl group include a methyl group, an ethyl group, an n-propyl group, an isopropyl group, an n-butyl group, a sec-butyl group, a tert-butyl group, an n-pentyl group, an n-hexyl group, an n-octyl group, and an n-decyl group. The alkyl group having 1 to 10 carbon atoms may have a substituent.

Examples of the alkenyl group having 2 to 10 carbon atoms represented by Rx include a linear or branched alkenyl group, and an alkenyl group having 2 to 5 carbon atoms is preferred. Moreover, the alkenyl group may have two or more unsaturated bonds. Suitable examples of such an alkenyl group include a vinyl group, a 1-propenyl group, a 2-propenyl group, a 1-methylvinyl group, a 1-butenyl group, a 2-butenyl group, a 3-butenyl group, a 1-methylpropenyl group, a 1-pentenyl group, and a 1,3-butadienyl group. The alkenyl group having 2 to 10 carbon atoms may have a substituent.

Examples of the alkynyl group having 2 to 10 carbon atoms represented by Rx include a linear or branched-chain alkynyl group, and an alkynyl group having 2 to 5 carbon atoms is preferred. Moreover, the alkynyl group may have two or more unsaturated bonds. Suitable examples of such an alkynyl group include an ethynyl group, a 1-propynyl group, a 2-propynyl group, a 1-methylethynyl group, a 1-butynyl group, a 2-butynyl group, a 3-butynyl group, a 1-methylpropynyl group, and a 1-pentynyl group. The alkynyl group having 2 to 10 carbon atoms may have a substituent.

A plurality of Rx's may be the same as or different from each other. The plurality of Rx's may be bonded to each other. When the plurality of Rx's are bonded to each other, a 3 to 10-membered ring having a nitrogen atom in the ring member may be formed, or a 5 to 8-membered ring having a nitrogen atom in the ring member may be formed. The ring may have a substituent.

Specific examples of the compound represented by the general formula (1) include, but not limited to, the following. "-NM₁-" in each compound has the same definition as "-N⁻(M₁⁺)-" in the general formula (1).

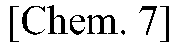

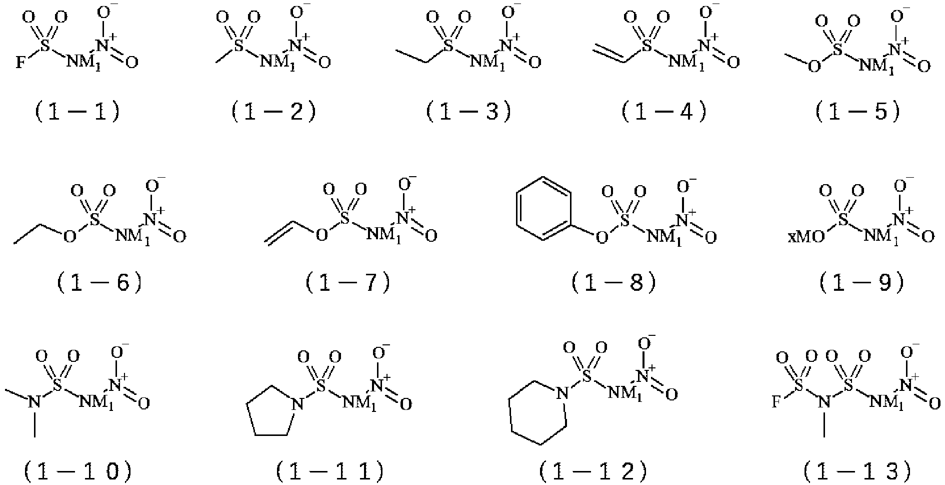

The compound represented by the general formula (2) will be described.

In the general formula (2), A² represents -N(H)- or -N⁻(M₂⁺)-.

M₂⁺ represents a metal cation or an onium cation. Examples of the metal cation include alkali metal ions and alkaline earth metal ions, and specific examples thereof include a lithium ion, a sodium ion, a potassium ion, and a magnesium ion. Examples of the onium cation include a quaternary ammonium cation.

In one preferable embodiment, in the general formula (2), A² represents -N(H)- or -N⁻(M₂⁺)-, and M₂⁺ represents a lithium ion or a sodium ion.

In the general formula (2), R² and R³ each independently represent a halogen atom, an alkyl group having 1 to 10 carbon atoms, an alkoxy group having 1 to 10 carbon atoms, an alkenyl group having 2 to 10 carbon atoms, an alkenyloxy group having 2 to 10 carbon atoms, an alkynyloxy group having 2 to 10 carbon atoms, an aryloxy group having 6 to 15 carbon atoms, a hydroxyl group, O⁻My⁺, or N(Ry)₂. R² and R³ may be the same as or different from each other.

The alkyl group having 1 to 10 carbon atoms represented by R² and R³ may be linear or branched-chain, and preferably has 1 to 5 carbon atoms. Examples of such an alkyl group include a methyl group, an ethyl group, an n-propyl group, an isopropyl group, an n-butyl group, a sec-butyl group, a tert-butyl group, an n-pentyl group, an n-hexyl group, an n-octyl group, and an n-decyl group. The alkyl group having 1 to 10 carbon atoms may have a substituent.

The alkoxy group having 1 to 10 carbon atoms represented by R² and R³ may be linear or branched-chain, and preferably has 1 to 5 carbon atoms. Examples of such an alkoxy group include a methoxy group, an ethoxy group, an n-propyloxy group, an isopropyloxy group, an n-butyloxy group, a sec-butyloxy group, a tert-butyloxy group, an n-pentyloxy group, an n-hexyloxy group, an n-octyloxy group, and an n-decyloxy group. The alkoxy group having 1 to 10 carbon atoms may have a substituent.

Examples of the alkenyl group having 2 to 10 carbon atoms represented by R² and R³ include a linear or branched alkenyl group, and an alkenyl group having 2 to 5 carbon atoms is preferred. Moreover, the alkenyl group may have two or more unsaturated bonds. Suitable examples of such an alkenyl group include a vinyl group, a 1-propenyl group, a 2-propenyl group, a 1-methylvinyl group, a 1-butenyl group, a 2-butenyl group, a 3-butenyl group, a 1-methylpropenyl group, a 1-pentenyl group, and a 1,3-butadienyl group. The alkenyl group having 2 to 10 carbon atoms may have a substituent.

Examples of the alkenyloxy group having 2 to 10 carbon atoms represented by R² and R³ include a linear or branched alkenyloxy group, and an alkenyloxy group having 2 to 5 carbon atoms is preferred. Moreover, the alkenyloxy group may have two or more unsaturated bonds. Suitable examples of such an alkenyloxy group include a vinyloxy group, a 1-propenyloxy group, a 2-propenyloxy group, a 1-methylvinyloxy group, a 1-butenyloxy group, a 2-butenyloxy group, a 3-butenyloxy group, a 1-methylpropenyloxy group, a 1-pentenyloxy group, and a 1,3-butadienyloxy group. The alkenyloxy group having 2 to 10 carbon atoms may have a substituent.

Examples of the alkynyloxy group having 2 to 10 carbon atoms represented by R² and R³ include a linear or branched alkynyloxy group, and an alkynyloxy group having 2 to 5 carbon atoms is preferred. Moreover, the alkynyloxy group may have two or more unsaturated bonds. Suitable examples of such an alkynyloxy group include an ethynyloxy group, a 1-propynyloxy group, a 2-propynyloxy group, a 1-methylethynyloxy group, a 1-butynyloxy group, a 2-butynyloxy group, a 3-butynyloxy group, a 1-methylpropynyloxy group, and a 1-pentynyloxy group. The alkynyloxy group having 2 to 10 carbon atoms may have a substituent.

Suitable examples of the aryloxy group having 6 to 15 carbon atoms represented by R² and R³ include a phenyloxy group and a naphthyloxy group. Moreover, the aryloxy group also includes those having a linking group such as a methylene group, and suitable examples thereof include a benzyloxy group. The aryloxy group having 6 to 15 carbon atoms may have a substituent.

In one preferable embodiment, at least one of R² or R³ is a fluorine atom, a methyl group, an ethyl group, an ethenyl group, a methoxy group, O⁻My⁺, or N(Ry)₂.

My⁺ represents a metal cation or an onium cation. Examples of the metal cation include alkali metal ions and alkaline earth metal ions, and specific examples thereof include a lithium ion, a sodium ion, a potassium ion, and a magnesium ion. Examples of the onium cation include a quaternary ammonium cation.

Each Ry independently represents a hydrogen atom, an alkyl group having 1 to 10 carbon atoms, an alkenyl group having 2 to 10 carbon atoms, an alkynyl group having 2 to 10 carbon atoms, or a fluorosulfonyl group.

The alkyl group having 1 to 10 carbon atoms represented by Ry may be linear or branched-chain, and preferably has 1 to 5 carbon atoms. Examples of such an alkyl group include a methyl group, an ethyl group, an n-propyl group, an isopropyl group, an n-butyl group, a sec-butyl group, a tert-butyl group, an n-pentyl group, an n-hexyl group, an n-octyl group, and an n-decyl group. The alkyl group having 1 to 10 carbon atoms may have a substituent.

Examples of the alkenyl group having 2 to 10 carbon atoms represented by Ry include a linear or branched alkenyl group, and an alkenyl group having 2 to 5 carbon atoms is preferred. Moreover, the alkenyl group may have two or more unsaturated bonds. Suitable examples of such an alkenyl group include a vinyl group, a 1-propenyl group, a 2-propenyl group, a 1-methylvinyl group, a 1-butenyl group, a 2-butenyl group, a 3-butenyl group, a 1-methylpropenyl group, a 1-pentenyl group, and a 1,3-butadienyl group. The alkenyl group having 2 to 10 carbon atoms may have a substituent.

Examples of the alkynyl group having 2 to 10 carbon atoms represented by Ry include a linear or branched-chain alkynyl group, and an alkynyl group having 2 to 5 carbon atoms is preferred. Moreover, the alkynyl group may have two or more unsaturated bonds. Suitable examples of such an alkynyl group include an ethynyl group, a 1-propynyl group, a 2-propynyl group, a 1-methylethynyl group, a 1-butynyl group, a 2-butynyl group, a 3-butynyl group, a 1-methylpropynyl group, and a 1-pentynyl group. The alkynyl group having 2 to 10 carbon atoms may have a substituent.

A plurality of Ry's may be the same as or different from each other. The plurality of Ry's may be bonded to each other. When the plurality of Ry's are bonded to each other, a 3 to 10-membered ring having a nitrogen atom in the ring member may be formed, or a 5 to 8-membered ring having a nitrogen atom in the ring member may be formed. The ring may have a substituent.

Specific examples of the compound represented by the general formula (2) include, but not limited to, the following. "-NM₂-" in each compound has the same definition as "-N⁻(M₂⁺)-" in the general formula (2).

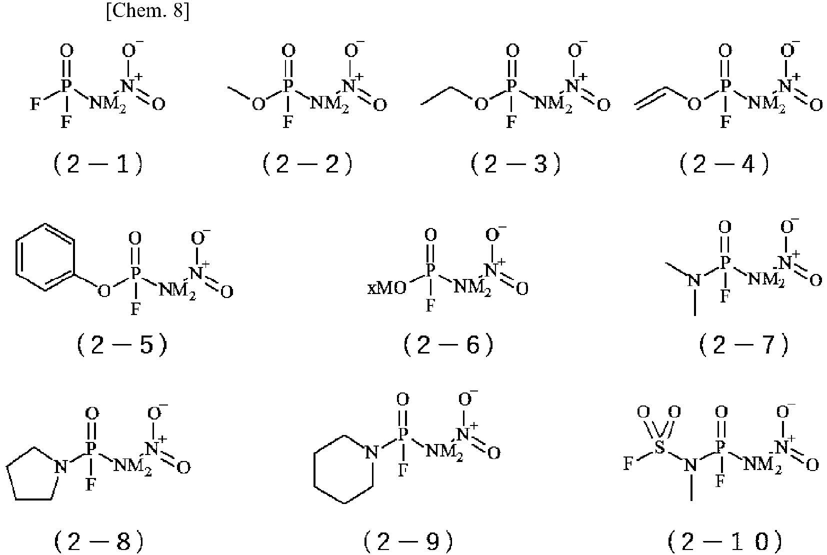

The content of (III) in the nonaqueous electrolyte solution of the present disclosure may be 0.01% by mass or more and 10% by mass or less, 0.07% by mass or more and 5.5% by mass or less, or 0.08% by mass or more and 5% by mass or less, with respect to the total amount of the nonaqueous electrolyte solution.

### <Other Component that may be Contained>

The nonaqueous electrolyte solution of the present disclosure includes the above-mentioned components as basic components, and the nonaqueous electrolyte solution of the present disclosure may contain a component described below (hereinafter also referred to as "other component that may be contained" or "other component") in any combination at any ratio as long as the gist of the present disclosure is not impaired. For example, another additive that is generally used in this technical field may be added at any ratio as the other component.

Examples of the other component include aromatic compounds such as cyclohexylbenzene, cyclohexyl fluorobenzene, biphenyl, 2-fluorobiphenyl, tert-butylbenzene, tert-amylbenzene, 2-fluorotoluene, fluorobenzene, and difluoroanisole; carbonate compounds such as vinylene carbonate (hereinafter, sometimes referred to as "VC"), an oligomer of vinylene carbonate (a number-average molecular weight in terms of polystyrene of 170 to 5,000), vinylethylene carbonate, divinylethylene carbonate, fluoroethylene carbonate (hereinafter, sometimes referred to as "FEC"), ethynyl ethylene carbonate, trans-difluoroethylene carbonate, methyl propargyl carbonate, ethyl propargyl carbonate, dipropargyl carbonate, dimethyl vinylene carbonate, dimethyl dicarbonate, bis(1,1,1,3,3,3-hexafluoro-1-propyl) carbonate, and bis(2,2,2-trifluoroethyl) carbonate; isocyanate compounds such as 1,6-diisocyanatohexane; organic acid anhydrides such as maleic anhydride, succinic anhydride, 1,4-dioxane-2,6-dione, glutaric anhydride, and methanedisulfonic anhydride; sulfonate ester compounds such as 1,3-propanesultone, 1,3-propenesultone, 1,4-butanesultone, 2,4-butanesultone, 1,3,2-dioxathiolane-2,2-dioxide, 4-propyl-1,3,2-dioxathiolane-2,2-dioxide, methylene methanedisulfonate, dimethylene methanedisulfonate, trimethylene methanedisulfonate, methyl methanesulfonate, methanesulfonyl fluoride, ethenesulfonyl fluoride, 1,2-ethanedisulfonic anhydride, methanesulfonic anhydride, and N,N'-carbonylbis(N-methylsulfamoyl fluoride); borate ester compounds such as difluoro(picolinato)borate; phosphate ester compounds such as phenyl difluorophosphate, tripropargyl phosphate, and tetrafluoro(picolinato)phosphate; phosphazene compounds such as (ethoxy)pentafluorocyclotriphosphazene; nitrile compounds such as succinonitrile; silane compounds such as methyldifluorovinylsilane, methylfluorodivinylsilane, dimethyldivinylsilane, trivinylmethylsilane, trivinylfluorosilane, tetravinylsilane, tris(trimethylsilyl)borate, and tris(trimethylsilyl)phosphate; siloxane compounds such as 1,3-dimethyl-1,3-divinyl-1,3-di(1,1,1,3,3,3-hexafluoroisopropyl)disiloxane; sulfonate salts such as a fluorosulfonate salt, a trifluoromethanesulfonate salt, a pentafluoroethanesulfonate salt, and a nonafluorobutanesulfonate salt (of these, a fluorosulfonate salt and a trifluoromethanesulfonate salt are preferred); monoalkylsulfate salts such as a monomethyl sulfate salt and a monoethyl sulfate salt; imide salts such as a bis(trifluoromethanesulfonyl)imide salt, a bis(pentafluoroethanesulfonyl)imide salt, a (trifluoromethanesulfonyl)(nonafluorobutanesulfonyl)imide salt, a (trifluoromethanesulfonyl)(pentafluoroethanesulfonyl)imide salt, a (trifluoromethanesulfonyl)(fluorosulfonyl)imide salt, a (pentafluoroethanesulfonyl)(fluorosulfonyl) imide salt, a (difluorophosphoryl)(fluorosulfonyl)imide salt, a (difluorophosphoryl)(trifluoromethanesulfonyl)imide salt, and a bis(difluorophosphoryl)imide salt (of these, a bis(trifluoromethanesulfonyl)imide salt, a (trifluoromethanesulfonyl)(fluorosulfonyl)imide salt, a (difluorophosphoryl)(fluorosulfonyl)imide salt, a (difluorophosphoryl)(trifluoromethanesulfonyl)imide salt, and a bis(difluorophosphoryl)imide salt are preferred); phosphates such as a monofluorophosphate salt, a difluorophosphate salt, a tetrafluoro(malonato)phosphate salt, a tris(oxalato)phosphate salt, a difluorobis(oxalato)phosphate salt, and a tetrafluorooxalatophosphate salt; borate salts such as a bis(oxalato)borate salt, a difluorooxalatoborate salt, and difluoro(malonato)borate salt; methide salts such as a tris(trifluoromethanesulfonyl)methide salt and a tris(fluorosulfonyl)methide salt; carboxylate salts such as an acrylate salt and a methacrylate salt; inorganic salts such as a nitrate salt and a nitrite salt; and fluorine-containing alcohols such as hexafluoroisopropanol and trifluoroethanol.

Moreover, the nonaqueous electrolyte solution of the present disclosure may further contain the following compound to improve the cycle capacity retention rate and the gas generation during a cycle test.

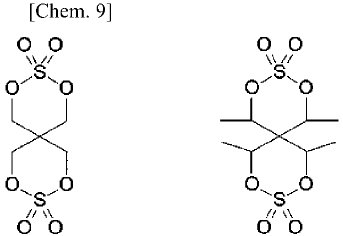

By adding the other component to the nonaqueous electrolyte solution of the present disclosure, at least one of the overcharge prevention effect, the negative electrode film formation effect, or the positive electrode protection effect may be improved.

In addition, as in the case of being used in a nonaqueous electrolyte solution battery referred to as a lithium polymer battery, an electrolyte solution for a nonaqueous electrolyte solution battery can be quasi-solidified with a gelling agent or a cross-linked polymer before use. Examples of the polymer include polymers having polyethylene oxide as a principal chain or a side chain, homopolymers or copolymers of polyvinylidene fluoride, methacrylic acid ester polymers, and polyacrylonitrile.

When the nonaqueous electrolyte solution of the present disclosure contains the other component, the other component content may be 0.01% by mass or more and 10% by mass or less with respect to the total amount of the nonaqueous electrolyte solution.

Here, of the other components described above, the fluoroethylene carbonate content may be 0.01% by mass or more and 55% by mass or less with respect to the total amount of the nonaqueous electrolyte solution.

The content of a bis(trifluoromethanesulfonyl)imide salt, a trifluoromethanesulfonate salt, or a nonafluorobutanesulfonate salt may be 0.01% by mass or more and 20% by mass or less with respect to the total amount of the nonaqueous electrolyte solution.

The content of bis(1,1,1,3,3,3-hexafluoro-1-propyl) carbonate or bis(2,2,2-trifluoroethyl) carbonate may be 0.1% by mass or more and 70% by mass or less with respect to the total amount of the nonaqueous electrolyte solution.

Moreover, when the other component is an ionic salt, the cation thereof is more preferably a lithium ion for use for a lithium ion battery application and is more preferably a sodium ion for use for a sodium ion battery application.

In the nonaqueous electrolyte solution of the present disclosure, a plurality of types of solutes described above (a lithium salt, a sodium salt, and the like) and salt compounds as the other components may be used according to required characteristics, or four or more types of alkali metal salts in total may be used. Moreover, five or more types of alkali metal salts described above may be used.

The nonaqueous electrolyte solution of the present disclosure is suitably used for a nonaqueous electrolyte solution battery (preferably a nonaqueous electrolyte solution secondary battery).

### 2. Nonaqueous Electrolyte Solution Battery

A nonaqueous electrolyte solution battery of the present disclosure includes at least the nonaqueous electrolyte solution of the present disclosure, a negative electrode, and a positive electrode. Further, a separator, an exterior body, and the like may be included. Instead of the separator, a solid electrolyte may be used as a medium impregnated with the nonaqueous electrolyte solution.

The nonaqueous electrolyte solution battery of the present disclosure preferably includes, at least, a positive electrode, a negative electrode, a separator, and the nonaqueous electrolyte solution of the present disclosure.

The nonaqueous electrolyte solution battery of the present disclosure is preferably a nonaqueous electrolyte solution secondary battery.

### [Negative Electrode]

The negative electrode is not particularly limited, but the negative electrode may contain at least one of an alkali metal, an alkali metal alloy, or a material into which an alkali metal is intercalated.

As the negative electrode, a material capable of reversibly intercalating and deintercalating alkali metal ions such as lithium ions and sodium ions, or alkaline earth metal ions may be used.

### [Negative Electrode Active Material]

For example, in the case of a lithium ion battery in which a cation is mainly lithium, a negative electrode active material constituting the negative electrode is one capable of doping and dedoping lithium ions. Examples of the negative electrode active material include a material containing at least one selected from a carbon material in which the d value of the (002) lattice plane in X-ray diffraction is 0.340 nm or less, such as artificial graphite and natural graphite, a carbon material in which the d value of the (002) lattice plane in X-ray diffraction exceeds 0.340 nm, such as hard carbon, lithium metal, an alloy of lithium metal and another metal (e.g., an alloy of one or more metals selected from Si, Sn, and Al, and lithium metal, and an alloy of an alloy containing one or more metals selected from Si, Sn, and Al, and lithium metal), an intermetallic compound of lithium metal and another metal, a metal oxide (e.g., an oxide of one or more metals selected from Si, Sn, and Al, and a lithium titanium oxide), a metal nitride, (elemental) tin, a tin compound, activated carbon, and a conductive polymer.

Suitable examples of the negative electrode active material include those containing Si and/or an Si metal oxide and a carbon material. The Si is silicon metal. The Si metal oxide may be a compound represented by SiOx (x is a value of 0.5 to 1.5). Here, the total content of the Si and/or the Si metal oxide contained in the negative electrode active material may be 0.1 to 50% by mass and preferably 0.1 to 30% by mass when the total amount of the Si and/or the Si metal oxide and the carbon material contained in the negative electrode active material is 100% by mass. As the carbon material, graphite is preferred, and various types of artificial graphite, natural graphite, or hard carbon (non-graphitizing carbon) can be used. Graphite has a very small change in crystal structure due to occlusion and release of lithium, and thus a high energy density and excellent cycle characteristics can be obtained. The shape of the graphite may be any of a fibrous shape, a spherical shape, a granular shape, and a scale-like shape. Amorphous carbon and graphite having a surface coated with amorphous carbon are more preferred because the reactivity between the surface of the material and the electrolyte solution is low.

One type of these negative electrode active materials can be used alone, or two or more types thereof can be used in combination.

For example, in the case of a sodium ion battery in which a cation is mainly sodium, as the negative electrode active material constituting the negative electrode, sodium metal, an alloy of sodium metal and another metal such as tin, an intermetallic compound of sodium metal and another metal, various carbon materials such as hard carbon, a metal oxide such as titanium oxide, a metal nitride, (elemental) tin, a tin compound, activated carbon, a conductive polymer, or the like may be used. In addition to these, (elemental) phosphorus such as red phosphorus and black phosphorus, phosphorus compounds such as Co-P, Cu-P, Sn-P, Ge-P, and Mo-P, (elemental) antimony, antimony compounds such as Sb/C and Bi-Sb, or the like may be used. One type of these negative electrode active materials may be used alone, or two or more types thereof may be used in combination.

### [Negative Electrode Current Collector]

The negative electrode has a negative electrode current collector. As the negative electrode current collector, for example, copper, stainless steel, nickel, titanium, or alloys thereof can be used. For the sodium ion battery, aluminum, an alloy thereof, or the like can also be used.

### [Negative Electrode Active Material Layer]

In the negative electrode, for example, a negative electrode active material layer is formed on at least one surface of the negative electrode current collector. The negative electrode active material layer includes, for example, the negative electrode active material described above, a binding agent, and if necessary, a conductive agent.

Examples of the binding agent include polytetrafluoroethylene, polyvinylidene fluoride, tetrafluoroethylene-perfluoroalkyl vinyl ether copolymers, styrene-butadiene rubber (hereinafter also referred to as "SBR"), carboxymethyl cellulose, methylcellulose, cellulose acetate phthalate, hydroxypropyl methylcellulose, polyvinyl alcohol, and polyimide.

As the conductive agent, for example, carbon materials such as acetylene black, Ketjen black, furnace black, carbon fibers, graphite, or fluorinated graphite can be used.

### [Positive Electrode]

The positive electrode is not particularly limited, but a material capable of reversibly intercalating and deintercalating alkali metal ions such as lithium ions and sodium ions, or alkaline earth metal ions may be used.

### [Positive Electrode Active Material]

For example, when the cation is lithium, lithium-containing transition metal composite oxides such as LiCoO₂, LiNiO₂, LiMnO₂, and LiMn₂O₄, lithium-containing transition metal composite oxides in which a plurality of transition metals, such as Co, Mn, and Ni, in the lithium-containing transition metal composite oxides are mixed, or lithium-containing transition metal composite oxides in which a part of the transition metals in the lithium-containing transition metal composite oxides is substituted with a metal other than the transition metals may be used as a positive electrode material (a positive electrode active material). Specific examples thereof include Li[Ni_{1/3}Mn_{1/3}Co_{1/3}]O₂, Li[Ni_{0.43}Mn_{0.35}Co_{0.2}]O₂, Li[Ni_{0.5}Mn_{0.3}Co_{0.2}]O₂, Li[Ni_{0.6}Mn_{0.2}Co_{0.2}]O₂, Li[Ni_{0.8}Mn_{0.1}Co_{0.1}]O₂ (hereinafter sometimes referred to as "NCM811"), Li[Ni_{0.49}Mn_{g 3}C_{00.2}Zr_{0.01]}O₂, Li[Ni_{0.49}Mn_{0.3}Co_{O.2}Mg_{0.01}]O₂, LiNi_{0.8}Co_{0.2}O₂, LiNi_{0.83}Co_{0.10}Al_{0.03}O₂, LiNi_{0.87}Co_{0.10}Al_{0.03}O₂, LiNi_{0.90}Co_{0.07}Al_{0.03}O₂, LiNi_{0.6}Co_{0.3}Al_{o.1}0₂, LiNi_{0.5}Mn_{1.5}O₄, LiNi_{0.5}Mn_{0.3}O₂, LiNi_{0.1}Mn_{1.9}O₄, LiCo_{0.5}Mn_{0.5}O₂, 0.5[LiNi_{0.5}Mn_{0.5}O₂]·0.5[Li₂MnO₃], 0.5[LiNi_{1/3}Co_{1/3}Mn_{1/3}O₂]·0.5 [Li₂MnO₃], 0.5[LiNi_{0.373}Co_{0.25}Mn_{0.375}O₂]·0.5[Li₂MnO₃], 0.5[LiNi_{0.375}Co_{0.125}Fe_{0.125}Mn_{0.375}O₂]·0.5[Li₂MnO₃], and 0.45[LiNi_{0.375}Co_{0.25}Mn_{0.375}O₂]·0.10[Li₂TiO₃]·0.45[Li₂MnO₃].

In addition, phosphoric acid compounds of transition metals, such as LiFePO₄ called olivine, LiCoPO₄, LiMnPO₄, and LiNiPO₄, oxides such as TiO₂, V₂O₃, and MoO₃, sulfides such as TiS₂, FeS, and MoS₂, conductive polymers such as polyacetylene, polyparaphenylene, polyaniline, and polypyrrole, activated carbon, radical-generating polymers, carbon materials, or the like may be used.

For example, when the cation is sodium, sodium-containing transition metal composite oxides such as NaCrO₂, NaFe_{0.5}Co_{0.5}O₂, NaFe_{0.4}Mn_{0.3}Ni_{0.3}O₂, NaNi_{0.5}Ti_{0.3}Mn_{0.2}O₂, NaNi_{1/3}Ti_{1/3}Mn_{1/3}O₂, NaNi_{0.33}Ti_{0.33}Mn_{0.16}Mg_{0.17}O₂, Na_{2/3}Ni_{1/3}Ti_{1/6}Mn_{1/2}O₂, and Na_{2/3}Ni_{1/3}Mn_{2/3}O₂, sodium-containing transition metal composite oxides in which a plurality of transition metals, such as Co, Mn, and Ni, in the sodium-containing transition metal composite oxides are mixed, sodium-containing transition metal composite oxides in which a part of the transition metals in the sodium-containing transition metal composite oxides is substituted with a metal other than the transition metals, polyanion type compounds such as NaFePO₄, NaVPO₄F, Na₃V₂(PO₄)₃, and Na₂Fe₂(SO₄)₃, sodium salts of Prussian Blue analogues represented by a compositional formula Na_{α}M⁰⁰¹p[Fe(CN)₆]_{γ} (M⁰⁰¹ represents Cr, Mn, Fe, Co, Ni, Cu, or Zn, 0 ≤ α ≤ 2, 0.5 ≤ β ≤ 1.5, and 0.5 ≤ y ≤ 1.5), oxides such as TiO₂, V₂O₃, and MoO₃, sulfides such as TiS₂, FeS, and MoS₂, conductive polymers such as polyacetylene, polyparaphenylene, polyaniline, and polypyrrole, activated carbon, radical-generating polymers, carbon materials, or the like may be used as a positive electrode material (positive electrode active material).

### [Positive Electrode Current Collector]

The positive electrode has a positive electrode current collector. As the positive electrode current collector, for example, aluminum, stainless steel, nickel, titanium, alloys thereof, or the like can be used.

### [Positive Electrode Active Material Layer]

In the positive electrode, for example, a positive electrode active material layer is formed on at least one surface of the positive electrode current collector. The positive electrode active material layer includes, for example, the positive electrode active material described above, a binding agent, and if necessary, a conductive agent.

Examples of the binder include those described in [Negative Electrode Active Material Layer].

As the conductive agent, for example, a carbon material such as acetylene black, Ketjen black, furnace black, carbon fibers, graphite (granular graphite and flake graphite), or fluorinated graphite can be used. For the positive electrode, acetylene black or Ketjen black with low crystallinity or the like is preferably used.

### [Methods for Producing Electrodes (Positive Electrode and Negative Electrode)]

For example, an active material, a binding agent, and if necessary, a conductive agent are dispersed and kneaded in a solvent such as N-methyl-2-pyrrolidone (NMP) or water in predetermined blending amounts, the obtained paste is applied to a current collector and dried to form an active material layer, and electrodes can be obtained. The obtained electrode is preferably compressed by a method such as roll pressing to adjust the electrode to an appropriate density.

### [Separator]

The nonaqueous electrolyte solution battery of the present disclosure can include a separator. As a separator for preventing contact between the positive electrode and the negative electrode, for example, a nonwoven fabric or a porous sheet made of polyolefin such as polypropylene and polyethylene, cellulose, paper, glass fibers, or the like is used. These films are preferably microporous so that the electrolyte solution easily permeates and the ions easily pass through.

Examples of the polyolefin separator include a film that electrically insulates the positive electrode and the negative electrode and that is permeable to lithium ions, such as microporous polymer films including a porous polyolefin film. As a specific example of the porous polyolefin film, for example, a porous polyethylene film alone or a multilayer film obtained by stacking a porous polyethylene film and a porous polypropylene film may be used. Another example is a film obtained by combining a porous polyethylene film and a polypropylene film.

The nonaqueous electrolyte solution of the present disclosure may be impregnated and held in the separator. An impregnation method is not particularly restricted and may be performed by a known method. Specifically, a battery including a positive electrode, a separator, and a negative electrode can be impregnated by injecting the electrolyte solution at the end.

### [Exterior Body]

As the exterior body of the nonaqueous electrolyte solution battery of the present disclosure, for example, a coin-shaped, cylindrical, or square-shaped metal can or a laminated exterior body can be suitably used. Suitable examples of a material for the metal can include nickel-plated steel, stainless steel, nickel-plated stainless steel, aluminum or an alloy thereof, nickel, and titanium. As the laminated exterior body, for example, an aluminum laminated film, a SUS laminated film, or a silica-coated laminated film of polypropylene, polyethylene, or the like can be used.

The configuration of the nonaqueous electrolyte solution battery according to the present embodiment is not particularly restricted, but can be, for example, a configuration in which electrode elements including a positive electrode and a negative electrode arranged to face each other and the nonaqueous electrolyte solution are included in the exterior body. The shape of the nonaqueous electrolyte solution battery is not particularly limited, but an electrochemical device having a shape such as a coin shape, a cylindrical shape, a square shape, or an aluminum laminate sheet shape is assembled with the above elements.

### 3. Method for Producing Nonaqueous Electrolyte Solution Battery

A method for producing the nonaqueous electrolyte solution battery of the present disclosure includes a step of injecting the nonaqueous electrolyte solution of the present disclosure. An injection method is not particularly restricted, and can be carried out by a conventionally employed method. Examples thereof include vacuum injection.

### Examples

Hereinafter, the present disclosure will be specifically described with reference to Examples, but the present disclosure is not limited by the Examples.

### <Synthesis Example 1-1>

### Synthesis of Compound (1-1-Li)

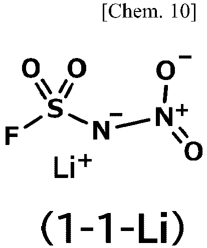

To a 50-mL recovery flask, 30 g of acetonitrile (hereinafter also referred to as "MeCN") and 0.45 g (6.5 mmol) of lithium nitrate were added, and after stirring at 20 to 30°C, 0.98 g (7.8 mmol) of fluorosulfonyl isocyanate was slowly added. After stirring at 30°C or lower for one hour, concentration was carried out to obtain 0.69 g (recovery rate: 70%) of a compound (1-1-Li).

### <Synthesis Example 1-2>

### Synthesis of Compound (1-5-Li)

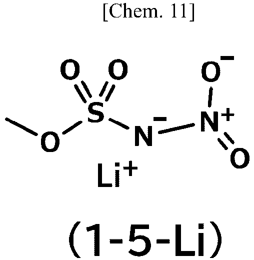

To a 50-mL recovery flask, 30 g of MeCN and 0.30 g (4.4 mmol) of lithium nitrate were added, and after stirring at 20 to 30°C, 0.66 g (4.8 mmol) of methoxysulfonyl isocyanate was slowly added. After stirring at 30°C or lower for one hour, concentration was carried out to obtain 0.51 g (recovery rate: 72%) of a compound (1-5-Li).

### <Synthesis Example 1-3>

### Synthesis of Compound (1-11-Li)

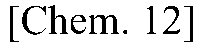

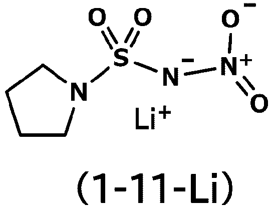

To a 50-mL recovery flask, 30 g of MeCN and 0.25 g (3.6 mmol) of lithium nitrate were added, and after stirring at 20 to 30°C, 0.67 g (3.8 mmol) of pyrrolidine-1-sulfonyl isocyanate was slowly added. After stirring at 30°C or lower for one hour, concentration was carried out to obtain 0.53 g (recovery rate: 73%) of a compound (1-11-Li).

### <Synthesis Example 2-1>

### Synthesis of Compound (2-1-Li)

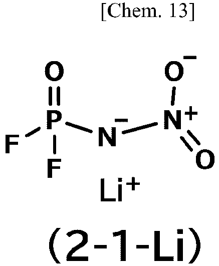

To a 50-mL recovery flask, 30 g of MeCN and 0.35 g (5.1 mmol) of lithium nitrate were added, and after stirring at 20 to 30°C, 0.84 g (6.6 mmol) of difluorophosphoryl isocyanate was slowly added. After stirring at 30°C or lower for one hour, concentration was carried out to obtain 0.51 g (recovery rate: 66%) of a compound (2-1-Li).

### <Synthesis Example 2-2>

### Synthesis of Compound (2-6-Li)

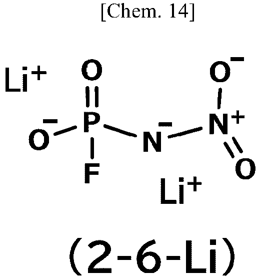

To a 50-mL recovery flask, 30 g of tetrahydrofuran and 0.25 g (1.6 mmol) of the compound (2-1-Li) were added, and after stirring at 20 to 30°C, 0.13 g (1.6 mmol) of 2-mercaptoethanol was slowly added at -10°C or lower. After stirring for 10 hours, 0.12 g (3.3 mmol) of lithium hydride was slowly added. The lower layer portion was extracted by decantation, followed by pressure filtration, 30 g of ethyl acetate was added to the resultant solid, and centrifugal sedimentation was carried out at 2,000 rpm for one hour. The supernatant was subjected to pressure filtration, and the resultant filtrate was concentrated to dryness to obtain 0.13 g (recovery rate: 62%) of a compound (2-6-Li).

The above-mentioned compounds were each subjected to a cation exchange reaction to obtain the following Compounds (1-1-Na), (1-5-Na), (1-11-Na), (2-1-Na), and (2-6-Na).

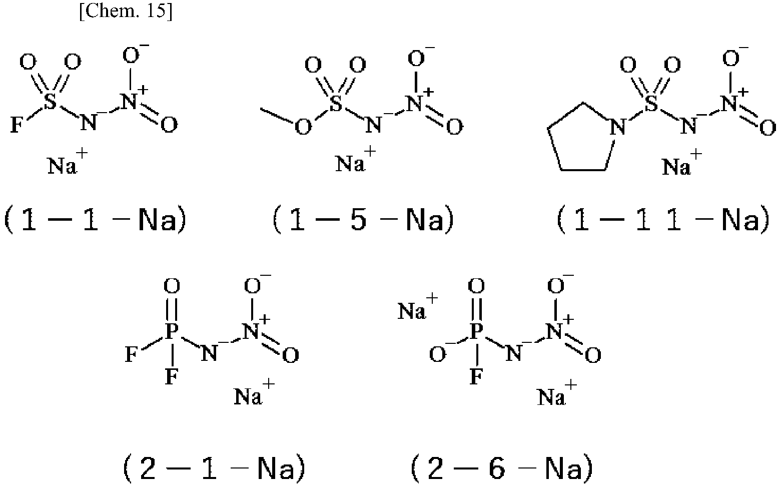

### [Preparation of Nonaqueous Electrolyte Solution]

### (Preparation of Nonaqueous Electrolyte Solution 1-1)

A mixed solvent of EC, DMC, and EMC at a volume ratio of 3:3:4 was used as a nonaqueous organic solvent, LiPF₆ was dissolved in the solvent as a solute so as to have a concentration of 1.0 mol/L, and as (III), the compound represented by the above formula (1-1-Li) was dissolved therein so as to have a concentration of 0.05% by mass based on the total amount of a nonaqueous electrolyte solution, to thereby obtain a nonaqueous electrolyte solution 1-1. The above preparation was carried out while maintaining the liquid temperature at 25°C.

### <Examples 1-2 to 1-10>

### (Preparation of Nonaqueous Electrolyte Solutions 1-2 to 1-10)

Nonaqueous electrolyte solutions 1-2 to 1-10 were prepared by dissolving by the same procedure as in the preparation of the nonaqueous electrolyte solution 1-1 except that the types and the concentrations of (III) were changed as shown in Table 1.

### <Comparative Example 1-1>

### (Preparation of Comparative Nonaqueous Electrolyte Solution 1-1)

A comparative nonaqueous electrolyte solution 1-1 was prepared by dissolving by the same procedure as in the preparation of the nonaqueous electrolyte solution 1-1 except that (III) was not added.

### <Comparative Examples 1-2 to 1-4>

### (Preparation of Comparative Nonaqueous Electrolyte Solutions 1-2 to 1-4)

Comparative nonaqueous electrolyte solutions 1-2 to 1-4 were each prepared by dissolving by the same procedure as in the preparation of the nonaqueous electrolyte solution 1-1 except that lithium dinitramide (hereinafter also referred to as "DN") was used instead of (III) as a comparative compound and the concentration thereof was changed as shown in Table 1. As DN, one obtained as follows with reference to PTL 1 was used.

### Synthesis of DN

To a 50 mL recovery flask, 5.5 mL of fuming nitric acid and 2 mL of fuming sulfuric acid were added, and 2.0 g of lithium sulfamate was slowly added at -40°C. After stirring at -40°C for 30 minutes, 40 mL of iced water was added, and the mixture was neutralized to a pH of 7.0 with a LiOH aqueous solution. The neutralized solution was evaporated to dryness and extracted with 2 mL of acetone. Twenty mL of 2-propanol was added to the acetone solution, and the mixture was dried under reduced pressure to obtain DN.

Furthermore, the above compound was subjected to a cation exchange reaction to obtain DN-Na.

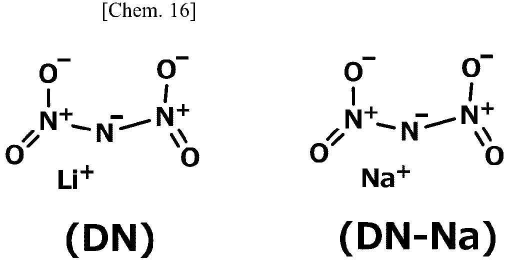

### <Examples 2-1 to 2-5 and Comparative Examples 2-1 and 2-2>

### (Preparation of Nonaqueous Electrolyte Solutions 2-1 to 2-5 and Comparative Nonaqueous Electrolyte Solutions 2-1 and 2-2)

Nonaqueous electrolyte solutions 2-1 to 2-5 and comparative nonaqueous electrolyte solutions 2-1 and 2-2 were each obtained in the same manner as in the preparation of the nonaqueous electrolyte solutions 1-4, 1-6 to 1-9, and comparative nonaqueous electrolyte solutions 1-1 and 1-3 except that VC and lithium bis(oxalate)borate (hereinafter also referred to as "BOB") were added as the other additives (1) and (2), respectively, and dissolved so as to have concentrations shown in Table 2. The other additives (1) and (2) correspond to the other components that may be contained.

### <Examples 3-1 to 3-5 and Comparative Examples 3-1 and 3-2> to <Examples 9-1 to 9-5 and Comparative Examples 9-1 and 9-2>

As shown in Tables 2 and 3, nonaqueous electrolyte solutions and comparative nonaqueous electrolyte solutions shown in the tables were each prepared by dissolving in the same manner as in the preparation of the nonaqueous electrolyte solutions 2-1 to 2-5 and the comparative nonaqueous electrolyte solutions 2-1 and 2-2 except that the other additive (2) was changed from BOB to compounds shown in the tables. Here, "DFBOP" means lithium difluorobis(oxalato)phosphate, "DFOB" means lithium difluorooxalatoborate, "TFOP" means lithium tetrafluorooxalatophosphate, "DTD" means 1,3,2-dioxathiolane-2,2-dioxide, "DFPFSI" means lithium (difluorophosphoryl)(fluorosulfonyl)imide, "FS" means lithium fluorosulfonate, and "TV-Si" means tetravinylsilane.

### <Examples 10-1 to 10-5 and Comparative Examples 10-1 and 10-2> to <Examples 33-1 to 33-5 and Comparative Examples 33-1 and 33-2>

As shown in Tables 4 to 9, nonaqueous electrolyte solutions and comparative nonaqueous electrolyte solutions shown in the tables were each prepared by dissolving in the same manner as in the preparation of the nonaqueous electrolyte solutions 2-1 to 2-5 and the comparative nonaqueous electrolyte solutions 2-1 and 2-2 except that compounds shown in "Additional Solute" in the tables in the shown amounts were added as the solute and the other additives (2) were changed to respective compounds shown in the tables. Here, "DFP" means lithium difluorophosphate, "FSI" means lithium bis(fluorosulfonyl)imide, and "BF₄" means lithium tetrafluoroborate.

### <Examples 34-1 to 34-10 and Comparative Examples 34-1 to 34-4> to <Examples 59-1 to 59-5 and Comparative Examples 59-1 and 59-2>

A mixed solution of EC, FEC, DMC, and EMC at a volume ratio of 3:0.2:3:3.8 was obtained as a mixed solution of a nonaqueous organic solvent and other components. Nonaqueous electrolyte solutions and comparative nonaqueous electrolyte solutions shown in the tables were each prepared by dissolving in the same manner as in the preparation of the electrolyte solutions shown in Tables 1 to 9 except for dissolving LiPF₆ and FSI as solutes in the mixed solvent so as to have concentrations of 1.0 mol/L and 0.1 mol/L, respectively, changing the other additives (2) to respective compounds shown in the tables as shown in Tables 10 to 16, and adding compounds shown in "Additional Solute" in the tables in amounts shown as a further solute.

### <Example 60-1>

### (Preparation of Nonaqueous Electrolyte Solution 60-1)

A mixed solution of EC, PC, FEC, and EMC at a volume ratio of 2:1:0.2:6.8 was obtained as a mixed solution of a nonaqueous organic solvent and other components. Sodium hexafluorophosphate (hereinafter also referred to as "NaPF₆") was dissolved as a solute in the mixed solution so as to have a concentration of 1.0 mol/L, and the compound represented by the above formula (1-1-Na) as (III) was dissolved therein so as to have a concentration of 0.05% by mass based on the total amount of a nonaqueous electrolyte solution, to thereby obtain a nonaqueous electrolyte solution 60-1. The above preparation was carried out while maintaining the liquid temperature at 25°C.

### <Examples 60-2 to 60-10>

### (Preparation of Nonaqueous Electrolyte Solutions 60-2 to 60-10)

Nonaqueous electrolyte solutions 60-2 to 60-10 were each prepared by dissolving by the same procedure as in the preparation of the nonaqueous electrolyte solution 60-1 except that the type and the concentration of (III) were changed as shown in Table 17.

### <Comparative Example 60-1>

### (Preparation of Comparative Nonaqueous Electrolyte Solution 60-1)

A comparative nonaqueous electrolyte solution 60-1 was prepared by dissolving by the same procedure as in the preparation of the nonaqueous electrolyte solution 60-1 except that (III) was not added.

### <Comparative Examples 60-2 to 60-4>

### (Preparation of Comparative Nonaqueous Electrolyte Solutions 60-2 to 60-4)

Comparative nonaqueous electrolyte solutions 60-2 to 60-4 were each prepared by dissolving by the same procedure as in the preparation of the nonaqueous electrolyte solution 60-1 except that DN-Na was used instead of (III) as a comparative compound and the concentration thereof was changed as shown in Table 17.

### <Examples 61-1 to 61-5 and Comparative Examples 61-1 and 61-2>

### (Preparation of Nonaqueous Electrolyte Solutions 61-1 to 61-5 and Comparative Nonaqueous Electrolyte Solutions 61-1 and 61-2)

Nonaqueous electrolyte solutions 61-1 to 61-5 and comparative nonaqueous electrolyte solutions 61-1 and 61-2 were each obtained in the same manner as in the preparation of the nonaqueous electrolyte solutions 60-4, 60-6 to 60-9 and the comparative nonaqueous electrolyte solutions 60-1 and 60-3 except that sodium difluorobis(oxalato)phosphate (hereinafter also referred to as "DFBOP-Na") was further added and dissolved as the other additive (1) so as to have a concentration shown in Table 18.

### <Examples 62-1 to 62-5 and Comparative Examples 62-1 to 62-4> to <Examples 67-1 to 67-5 and Comparative Examples 67-1 and 67-2>

As shown in Tables 18 and 19, nonaqueous electrolyte solutions and comparative nonaqueous electrolyte solutions shown in the tables were each prepared by dissolving in the same manner as in the preparation of the nonaqueous electrolyte solutions 61-1 to 61-5 and the comparative nonaqueous electrolyte solutions 61-1 and 61-2 except that the other additive (1) was changed from DFBOP-Na to respective compounds shown in the tables. Here, "DFOB-Na" means sodium difluorooxalatoborate, "TFOP-Na" means sodium tetrafluorooxalatophosphate, "DFPFSI-Na" means sodium (difluorophosphoryl)(fluorosulfonyl)imide, and "FS-Na" means sodium fluorosulfonate.

### <Examples 68-1 to 68-5 and Comparative Examples 68-1 and 68-2> to <Examples 88-1 to 88-5 and Comparative Examples 88-1 and 88-2>

As shown in Tables 20 to 25, nonaqueous electrolyte solutions and comparative nonaqueous electrolyte solutions shown in the tables were each prepared by dissolving in the same manner as in the preparation of the nonaqueous electrolyte solutions 61-1 to 61-5 and the comparative nonaqueous electrolyte solutions 61-1 and 61-2 except that compounds shown in "Additional Solute" in the tables in the shown amounts were added as the solute and the other additive (1) was changed to respective compounds shown in the tables. Here, "DFP-Na" means sodium difluorophosphate, "FSI-Na" means sodium bis(fluorosulfonyl)imide, and "BF₄-Na" means sodium tetrafluoroborate.

### <Example 89-1>

### (Preparation of Nonaqueous Electrolyte Solution 89-1)

A mixed solvent of 1,3-dioxolane (hereinafter also referred to as "DOL") and dimethoxymethane (hereinafter also referred to as "DME") at a volume ratio of 1:2 was used as a nonaqueous organic solvent, FSI was dissolved in the solvent as a solute so as to have a concentration of 0.8 mol/L, and the compound represented by the above formula (1-1-Li) as (III) was dissolved therein so as to have a concentration of 1.0% by mass based on the total amount of a nonaqueous electrolyte solution, to thereby obtain a nonaqueous electrolyte solution 89-1. The above preparation was carried out while maintaining the liquid temperature at 25°C.

### <Examples 89-2 to 89-9>

### (Preparation of Nonaqueous Electrolyte Solutions 89-2 to 89-9)

Nonaqueous electrolyte solutions 89-2 to 89-9 were each prepared by dissolving by the same procedure as in the preparation of the nonaqueous electrolyte solution 89-1 except that the type and the concentration of (III) were changed as shown in Table 26.

### <Comparative Example 89-1>

### (Preparation of Comparative Nonaqueous Electrolyte Solution 89-1)

A comparative nonaqueous electrolyte solution 89-1 was prepared by dissolving by the same procedure as in the preparation of the nonaqueous electrolyte solution 89-1 except that (III) was not added.

### <Comparative Examples 89-2 to 89-4>

### (Preparation of Comparative Nonaqueous Electrolyte Solutions 89-2 to 89-4)

Comparative nonaqueous electrolyte solutions 89-2 to 89-4 were each prepared by dissolving by the same procedure as in the preparation of the nonaqueous electrolyte solution 89-1 except that DN was used instead of (III) as a comparative compound and the concentration thereof was changed as shown in Table 26.

### [Production of Nonaqueous Electrolyte Solution Battery]

### (Production of NCM622 Positive Electrode)

In 90.0% by mass of LiNi_{0.6}Co_{0.2}Mn_{0.2}O₂ powder, 5.0% by mass of polyvinylidene fluoride (hereinafter also referred to as "PVDF") as a binder and 5.0% by mass of acetylene black as a conductive material were mixed, and N-methyl-2-pyrrolidone (hereinafter also referred to as "NMP") was further added to produce a positive electrode mixture paste. The paste was applied onto both sides of an aluminum foil (A1085), dried, pressed, and then punched into 4 cm × 5 cm to obtain an NCM622 positive electrode for testing.

### (Production of NCM811 Positive Electrode)

In 92.0% by mass of LiNi_{0.8}Mn_{0.1}Co_{0.1}O₂ powder, 3.5% by mass of PVDF as a binder and 4.5% by mass of acetylene black as a conductive material were mixed, and NMP was further added to produce a positive electrode mixture paste. The paste was applied onto both sides of an aluminum foil (A1085), dried, pressed, and then punched into 4 cm × 5 cm to obtain an NCM811 positive electrode for testing.

### (Production of Sodium Ion Battery Positive Electrode: NaNi_{0.5}Ti_{0.3}Mn_{0.2}O₂ Positive Electrode)

90.0% by mass of NaNi_{0.5}Ti_{0.3}Mn_{0.2}O₂ as a positive electrode active material, 5.0% by mass of acetylene black as a conductive agent, and 5.0% by mass of PVDF as a binding agent were mixed, and further NMP was added as a solvent, to produce a positive electrode mixture paste. The paste was applied onto both sides of an aluminum foil (A1085), dried, pressed, and then punched into 4 cm × 5 cm to obtain an NaNi_{0.5}Ti_{0.3}Mn_{0.2}O₂ positive electrode for testing.

### (Production of Sulfur Positive Electrode)

80.0% by mass of sulfur-CNT composite (weight ratio of sulfur:carbon = 70:30) as a positive electrode active material, 10.0% by mass of conductive material (HS-100 manufactured by Denka Company Limited), 6.5% by mass of styrene butadiene rubber (hereinafter also referred to as "SBR"), 3.5% by mass of carboxymethylcellulose sodium (hereinafter also referred to as "CMC"), and water were mixed to produce a positive electrode mixture paste. The paste was applied onto one side of an aluminum foil (A1085), dried, pressed, and then punched into a circle with a diameter of 10 mm to obtain a sulfur positive electrode for testing.

### (Production of Natural Graphite Negative Electrode)

92.0% by mass of natural graphite powder, 3.0% by mass of conductive material (HS-100 manufactured by Denka Company Limited), 2.0% by mass of carbon nanofiber (VGCF manufactured by Showa Denko K.K.), 2.0% by mass of SBR, 1.0% by mass of CMC, and water were mixed to produce a negative electrode mixture paste. The paste was applied onto one side of a copper foil, dried, pressed, and then punched into 4.5 cm × 5.5 cm to obtain a natural graphite negative electrode for testing.

### (Production of Silicon-Containing Graphite Negative Electrode)

To 85.0% by mass of artificial graphite powder, 7.0% by mass of nanosilicon, 3.0% by mass of conductive material (HS-100 manufactured by Denka Company Limited), 2.0% by mass of carbon nanofiber (VGCF manufactured by Showa Denko K.K.), 2.0% by mass of SBR, 1.0% by mass of CMC, and water were mixed to produce a negative electrode mixture paste. The paste was applied onto one side of a copper foil, dried, pressed, and then punched into 4.5 cm × 5.5 cm to obtain a silicon-containing graphite negative electrode for testing.

### (Production of Hard Carbon Negative Electrode)

90.0% by mass of hard carbon powder (Carbotron P manufactured by Kureha Corporation) and 10% by mass of PVDF as a binding agent were mixed, and NMP was further added as a solvent to produce a negative electrode mixture paste. The paste was applied onto one side of an aluminum foil (A1085), dried, pressed, and then punched into 4.5 cm × 5.5 cm to obtain a hard carbon negative electrode for testing.

### (Production of Lithium Metal Negative Electrode)

A sheet-shaped metal lithium was punched into a circle with a diameter of 12 mm to produce a lithium metal negative electrode for testing.

### (Production of Nonaqueous Electrolyte Solution Battery)

In an argon atmosphere at a dew point of -50°C or lower, a terminal was welded to the above NCM622 positive electrode, and both sides of the welded product were then sandwiched between two polyethylene separators (5 cm × 6 cm). The outside of the sandwiched product was further sandwiched between two natural graphite negative electrodes to which a terminal had been welded in advance so that the surface of the negative electrode active material faced the surface of the positive electrode active material. The resultant product was put in an aluminum laminated bag having an opening on one side, and after the nonaqueous electrolyte solution was vacuum-injected into the bag, the opening was sealed with heat. In this manner, the aluminum laminated nonaqueous electrolyte solution batteries (lithium ion batteries) according to the Examples and the Comparative Examples in Tables 1 to 9 were produced.

In the Examples and the Comparative Examples in Tables 10 to 16, nonaqueous electrolyte solution batteries (lithium ion batteries) were similarly produced using NCM811 as the positive electrode and silicon-containing graphite as the negative electrode.

In the Examples and the Comparative Examples in Tables 17 to 25, nonaqueous electrolyte solution batteries (sodium ion batteries) were similarly produced using the NaNi_{0.5}Ti_{0.3}Mn_{0.2}O₂ positive electrode as the positive electrode and the hard carbon negative electrode as the negative electrode.

In the Examples and Comparative Examples in Table 26, in an argon atmosphere at a dew point of -50°C or lower, the sulfur positive electrode as the positive electrode and the lithium metal negative electrode as the negative electrode were arranged to face each other, a polyethylene separator (diameter: 15 mm) was disposed between the electrodes, and the electrolyte solutions prepared were each injected to produce coin-shaped nonaqueous electrolyte solution batteries (lithium sulfur batteries).

### [Evaluation]

### <Initial Charge and Discharge Test: Lithium Ion Battery>

First, each of the produced batteries was conditioned at an ambient temperature of 25°C under the following conditions. That is, as an initial charge and discharge test, a charge and discharge cycle including constant-current constant-voltage charging at an upper limit charge voltage of 4.2 V and at 5 mA, constant-current discharging at 10 mA to a discharge end voltage of 2.5 V, subsequent constant-current constant-voltage charging at an upper limit charge voltage of 4.2 V and at 10 mA, and constant-current discharging at 10 mA to a discharge end voltage of 2.5 V was repeated three times. The discharge capacity in the third cycle was defined as the initial discharge capacity.

### <Initial Charge and Discharge Test: Sodium Ion Battery>

First, each of the produced batteries was conditioned at an ambient temperature of 25°C under the following conditions. That is, as an initial charge and discharge test, a charge and discharge cycle including constant-current constant-voltage charging at an upper limit charge voltage of 4.1 V and at 5 mA, constant-current discharging at 10 mA to a discharge end voltage of 1.5 V, subsequent constant-current constant-voltage charging at an upper limit charge voltage of 4.1 V and at 10 mA, and constant-current discharging at 10 mA to a discharge end voltage of 1.5 V was repeated three times. The discharge capacity in the third cycle was defined as the initial discharge capacity.

### <Initial Charge and Discharge Test: Lithium Sulfur Battery>

First, each of the produced batteries was conditioned at an ambient temperature of 25°C under the following conditions. That is, as an initial charge and discharge test, constant-current discharge was performed at 0.24 mA to a discharge end voltage of 1.8 V. Thereafter, a cycle including constant-current constant-voltage charging at an upper limit charge voltage of 2.5 V and at 0.24 mA and constant-current discharging at 0.24 mA to a discharge end voltage of 1.8 V were repeated twice. The discharge capacity in the second cycle was defined as the initial discharge capacity.

### <Cycle Test (25°C): Lithium Ion Battery>

The nonaqueous electrolyte solution batteries after the completion of the initial charge and discharge test were each subjected to constant-current constant-voltage charging at an upper limit charge voltage of 4.2 V and at 100 mA and constant-current discharging at 100 mA to a discharge end voltage of 2.5 V. The charging and discharging at 100 mA in an environment at 25°C were repeated 500 cycles. Thereafter, the batteries were each subjected to constant-current constant-voltage charging at an upper limit charge voltage of 4.2 V and at 10 mA and constant-current discharging at 10 mA to a discharge end voltage of 2.5 V. The discharge capacity thereof was defined as the discharge capacity after the cycle test.

### <Cycle Test (25°C): Sodium Ion Battery>

Except that the upper limit charge voltage was changed to 4.1 V and that the discharge end voltage was changed to 1.5 V, evaluation was performed in the same manner as that for the lithium ion battery.

### < Cycle Test (25°C): Lithium Sulfur Battery>

The nonaqueous electrolyte solution batteries after the completion of the initial charge and discharge test were each subjected to constant-current constant-voltage charging at an upper limit charge voltage of 2.5 V and at 1.2 mA and constant-current discharging at 1.2 mA to a discharge end voltage of 1.8 V. The charging and discharging at 1.2 mA in an environment at 25°C were repeated 50 cycles. Thereafter, the batteries were each subjected to constant-current constant-voltage charging at an upper limit charge voltage of 2.5 V and at 0.24 mA and constant-current discharging at 0.24 mA to a discharge end voltage of 1.8 V. The discharge capacity thereof was defined as the discharge capacity after the cycle test.

### <Capacity Retention Rate after Cycle Test: Lithium Ion Battery>

The capacity retention rate after the cycle test was determined by the following equation. A larger value thereof means better cycle characteristics. 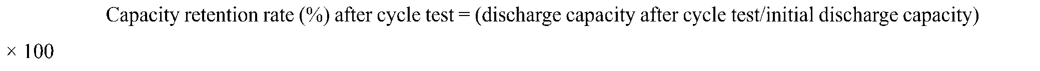 Capacity retention rate (%) after cycle test = (discharge capacity after cycle test/initial discharge capacity) × 100

### <Capacity Retention Rate after Cycle Test: Sodium Ion Battery>

Evaluation was performed in the same manner as that for the lithium ion battery. A larger value thereof means better cycle characteristics.

### <Capacity Retention Rate after Cycle Test: Lithium Sulfur Battery>

Evaluation was performed in the same manner as that for the lithium ion battery. A larger value thereof means better cycle characteristics.

### <High-Temperature Storage Test (70°C): Lithium Ion Battery>

The nonaqueous electrolyte solution battery in which the initial charge and discharge test was completed was subjected to constant-current constant-voltage charging at a charge upper limit voltage of 4.2 V and at 10 mA, and was left to stand at 70°C for 60 days. Thereafter, the battery was left to stand in an environment of 25°C for 4 hours, and constant-current discharge was performed at a discharge end voltage of 2.5 V and at 10 mA. Furthermore, the battery was subjected to constant-current constant-voltage charging at an upper limit charge voltage of 4.2 V and at 10 mA and constant-current discharging at 10 mA to a discharge end voltage of 2.5 V. The discharge capacity thereof was defined as the discharge capacity after the high-temperature storage test.

### <High-Temperature Storage Test (70°C): Sodium Ion Battery>

Except that the upper limit charge voltage was changed to 4.1 V and that the discharge end voltage was changed to 1.5 V, evaluation was performed in the same manner as that for the lithium ion battery.

### <High-Temperature Storage Test (45°C): Lithium Sulfur Battery>

The nonaqueous electrolyte solution battery in which the initial charging and discharging test was completed was subjected to constant-current constant-voltage charging at an upper limit charge voltage of 2.5 V and at 0.24 mA, and was left to stand in an environment of 45°C for 24 hours. Thereafter, the battery was left to stand in an environment of 25°C for 2 hours, and constant-current discharge was performed at a discharge end voltage of 1.8 V and at 0.24 mA. Furthermore, the battery was subjected to constant-current constant-voltage charging at 2.5 V and at 0.24 mA and constant-current discharging at 0.24 mA to a discharge end voltage of 1.8 V. The discharge capacity thereof was defined as the discharge capacity after the high-temperature storage test.

### <Capacity Retention Rate after High-Temperature Storage Test: Lithium Ion Battery>

The capacity retention rate after the high-temperature storage test was determined by the following equation. A larger value thereof means better high-temperature storage characteristics. 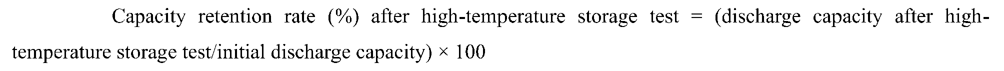 Capacity retention rate (%) after high-temperature storage test = (discharge capacity after high-temperature storage test/initial discharge capacity) × 100

### <Capacity Retention Rate after High-Temperature Storage Test: Sodium Ion Battery>

Evaluation was performed in the same manner as that for the lithium ion battery. A larger value thereof means better high-temperature storage characteristics.

### <Capacity Retention Rate after High-Temperature Storage Test: Lithium Sulfur Battery>

Evaluation was performed in the same manner as that for the lithium ion battery. A larger value thereof means better high-temperature storage characteristics.

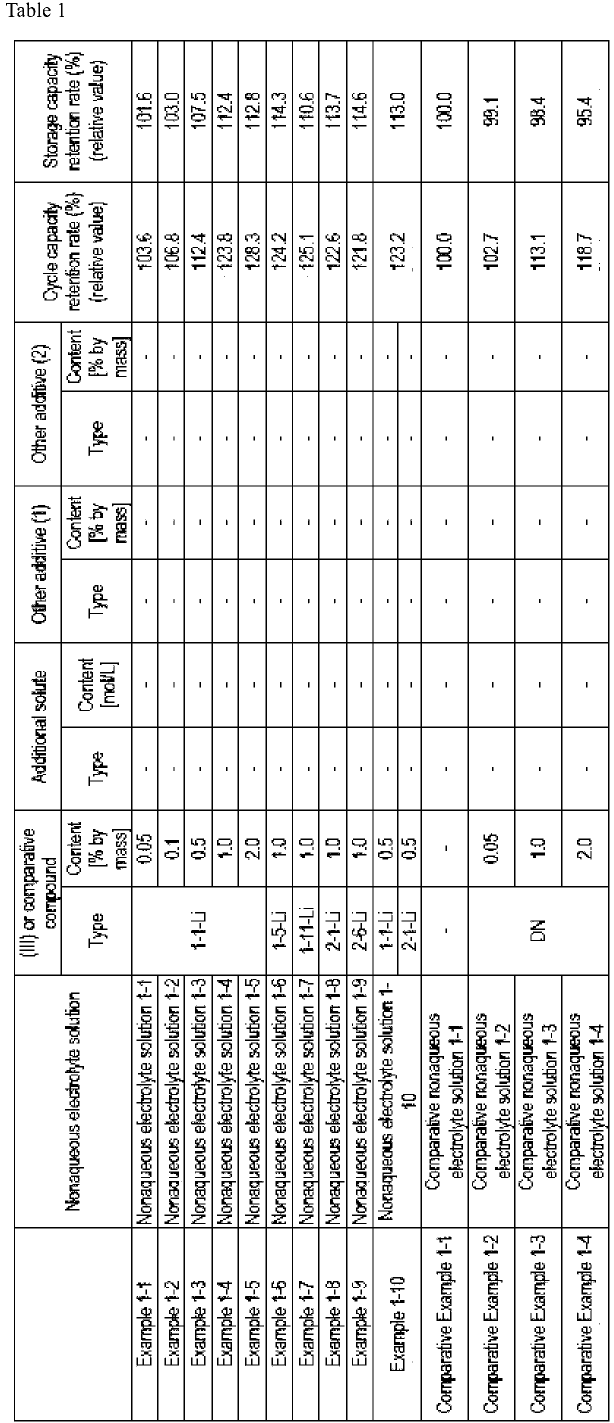

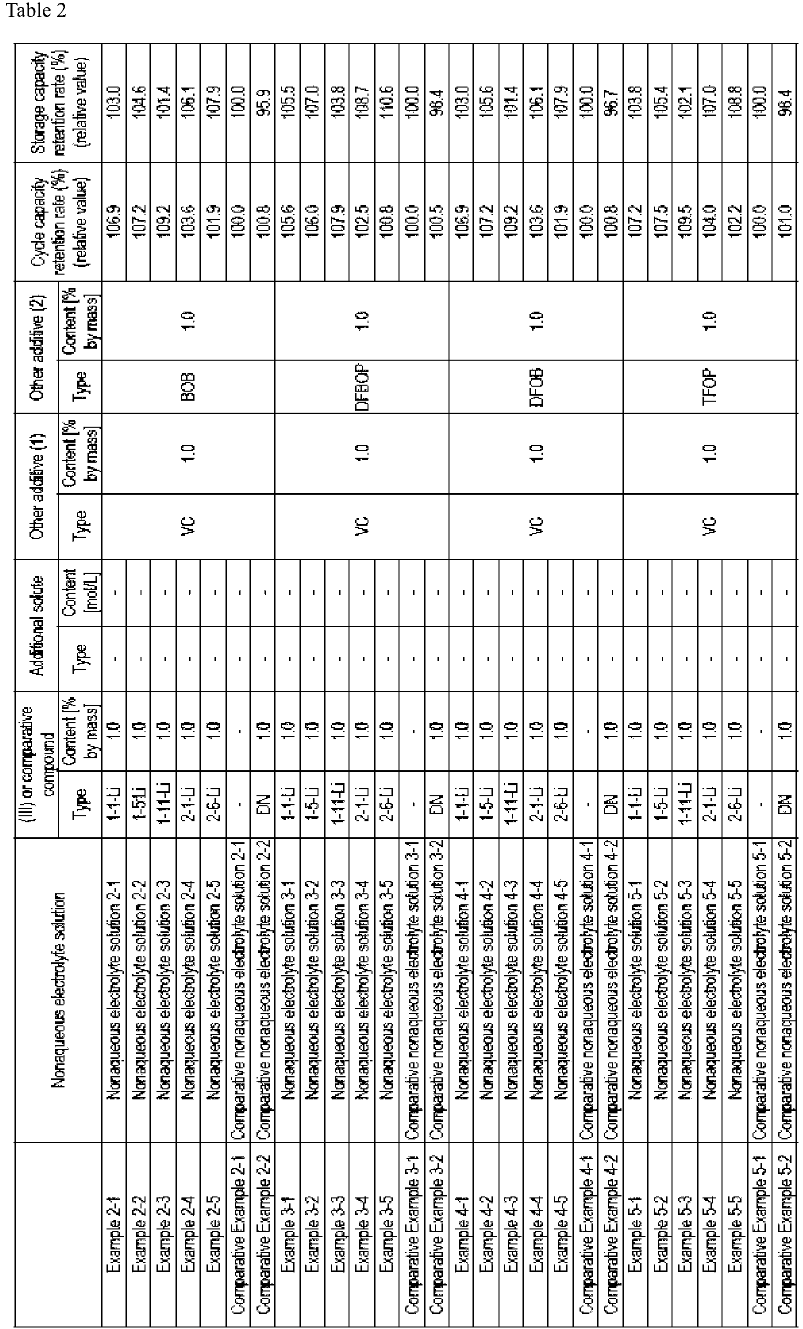

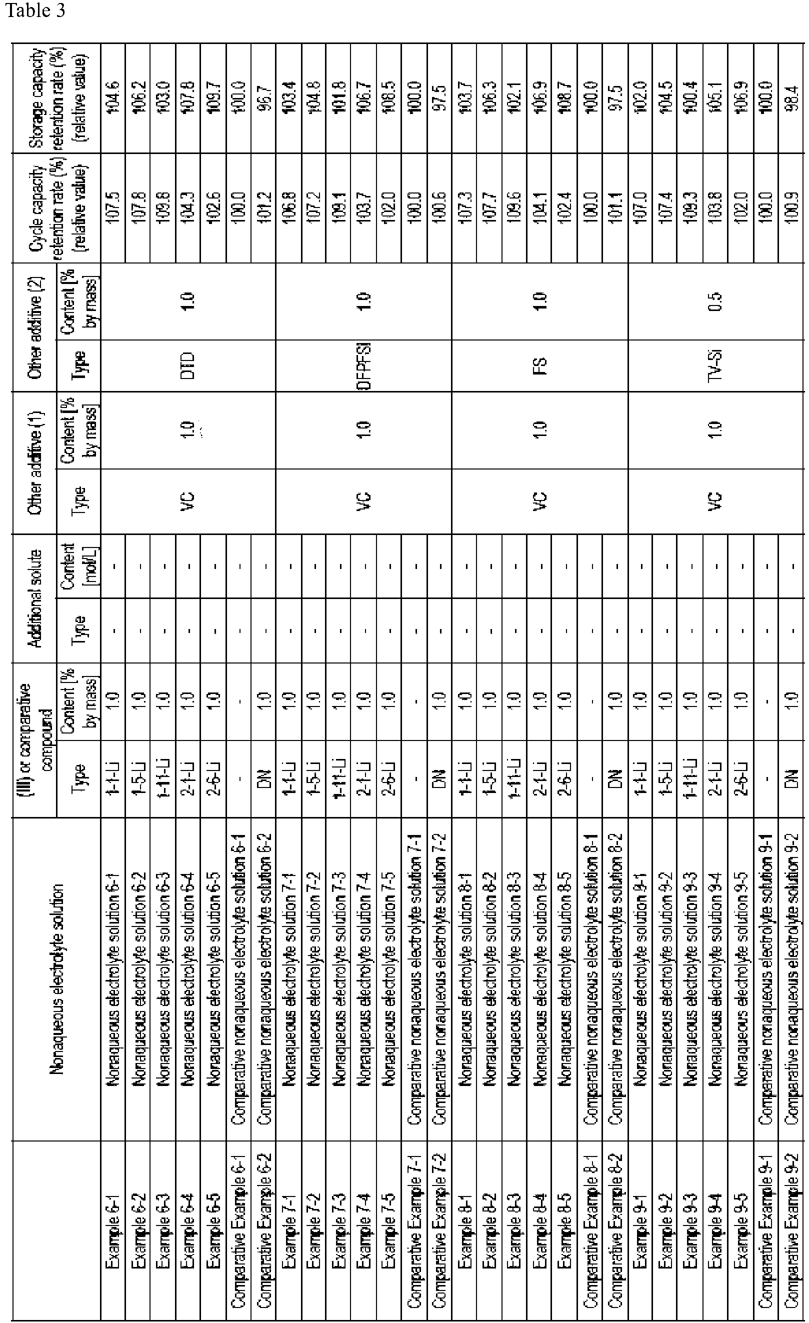

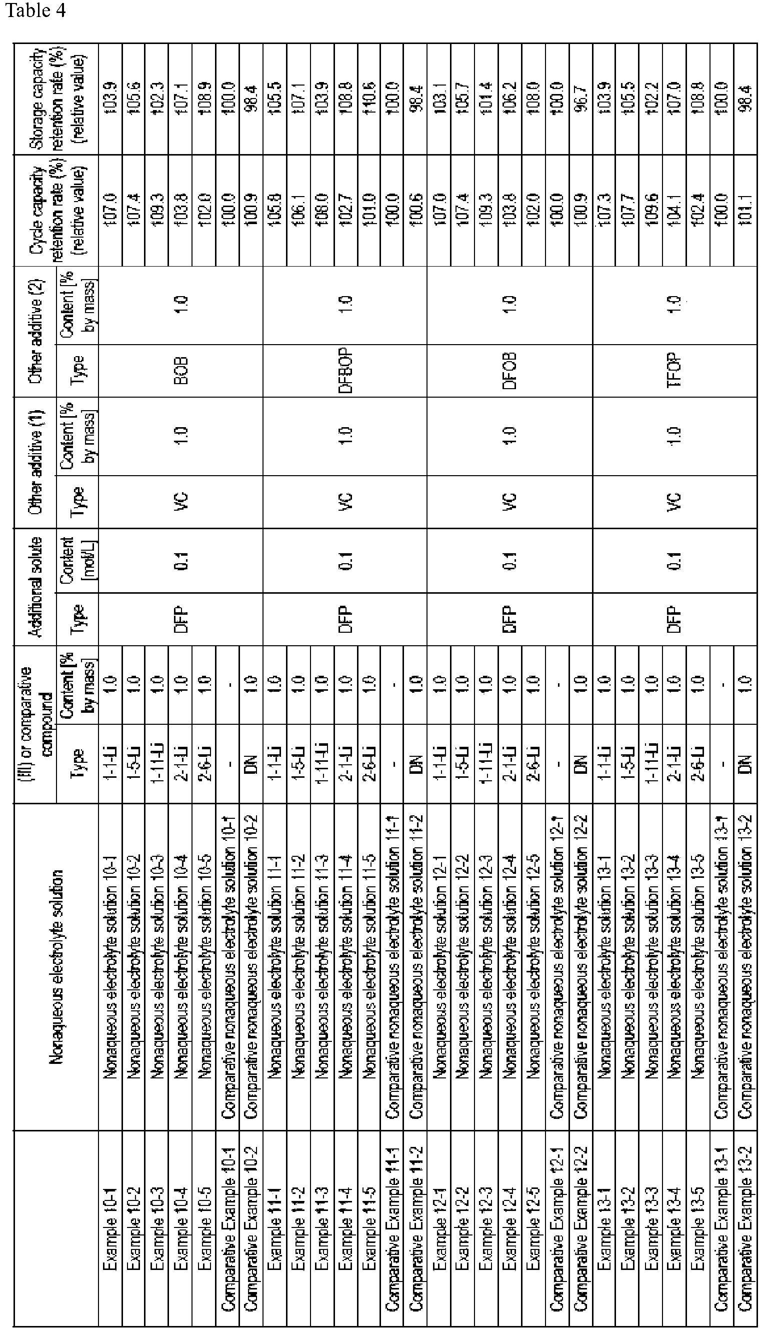

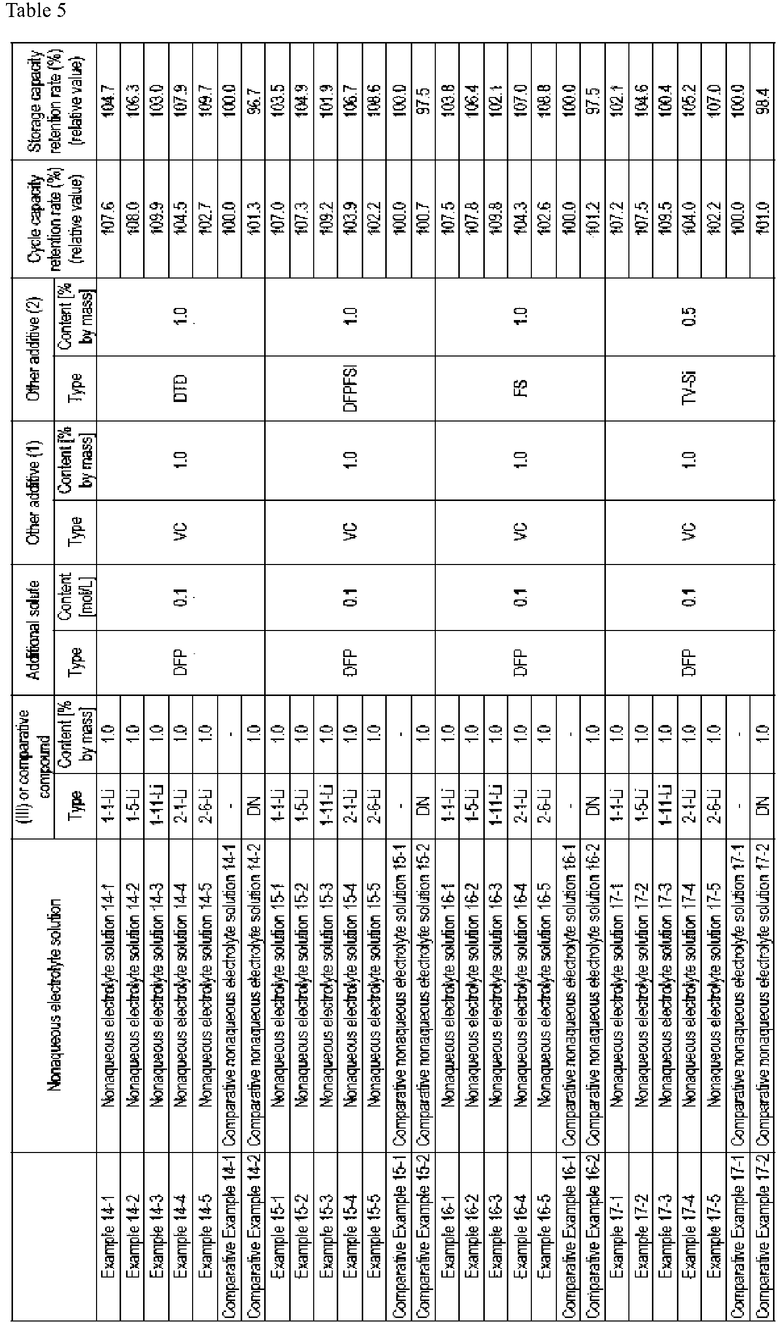

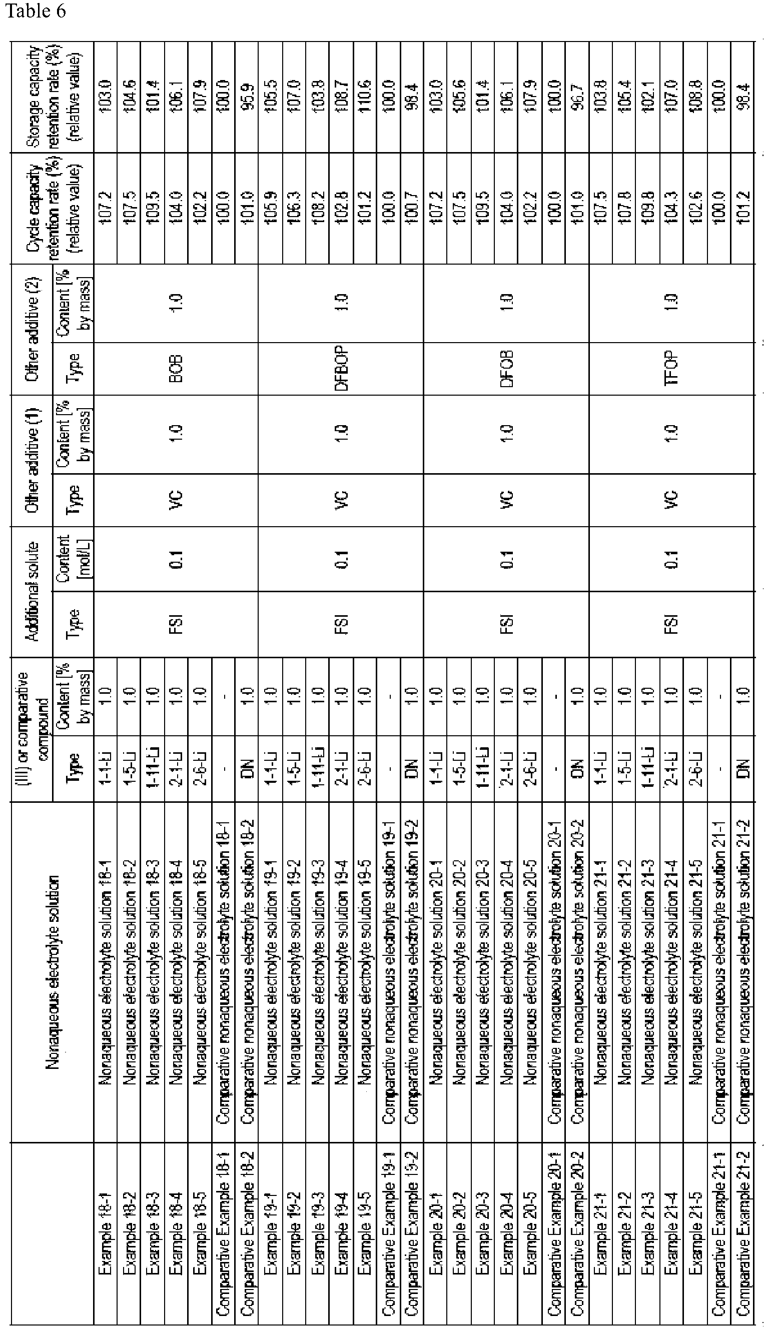

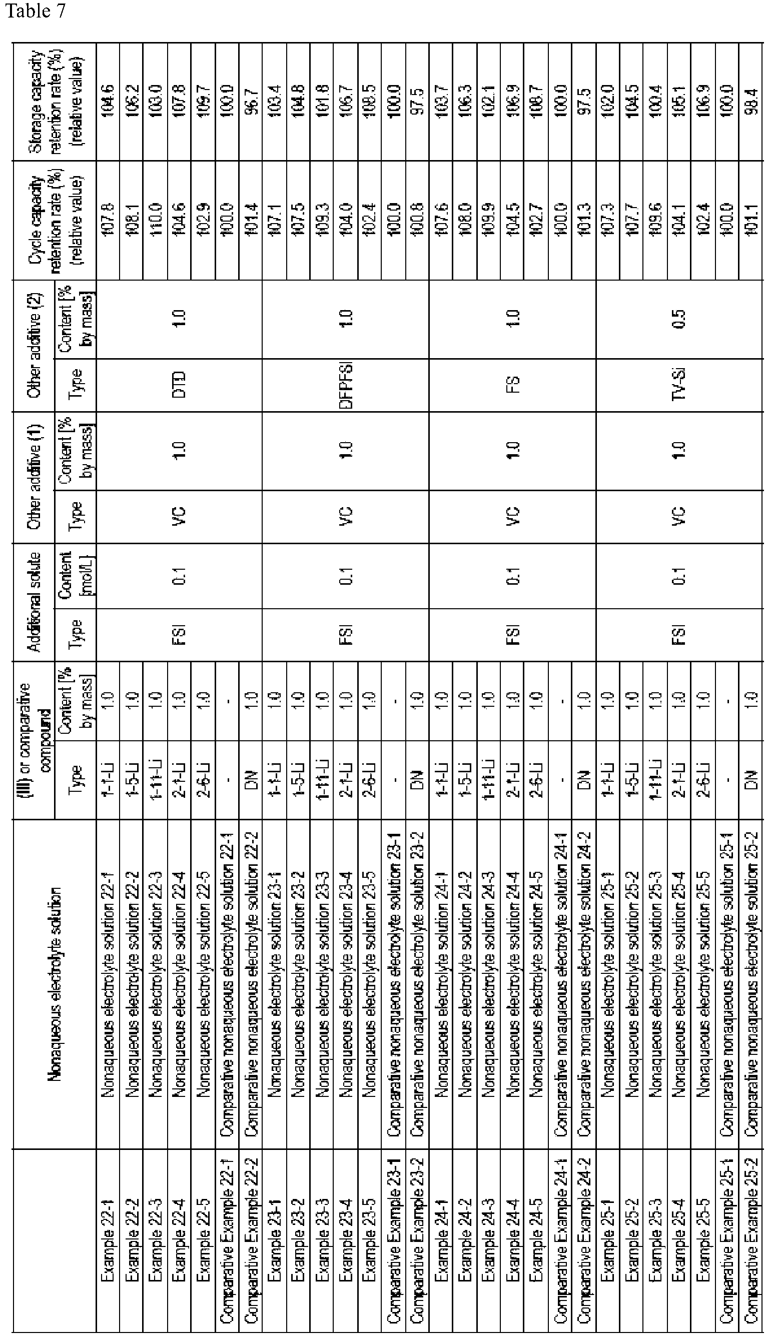

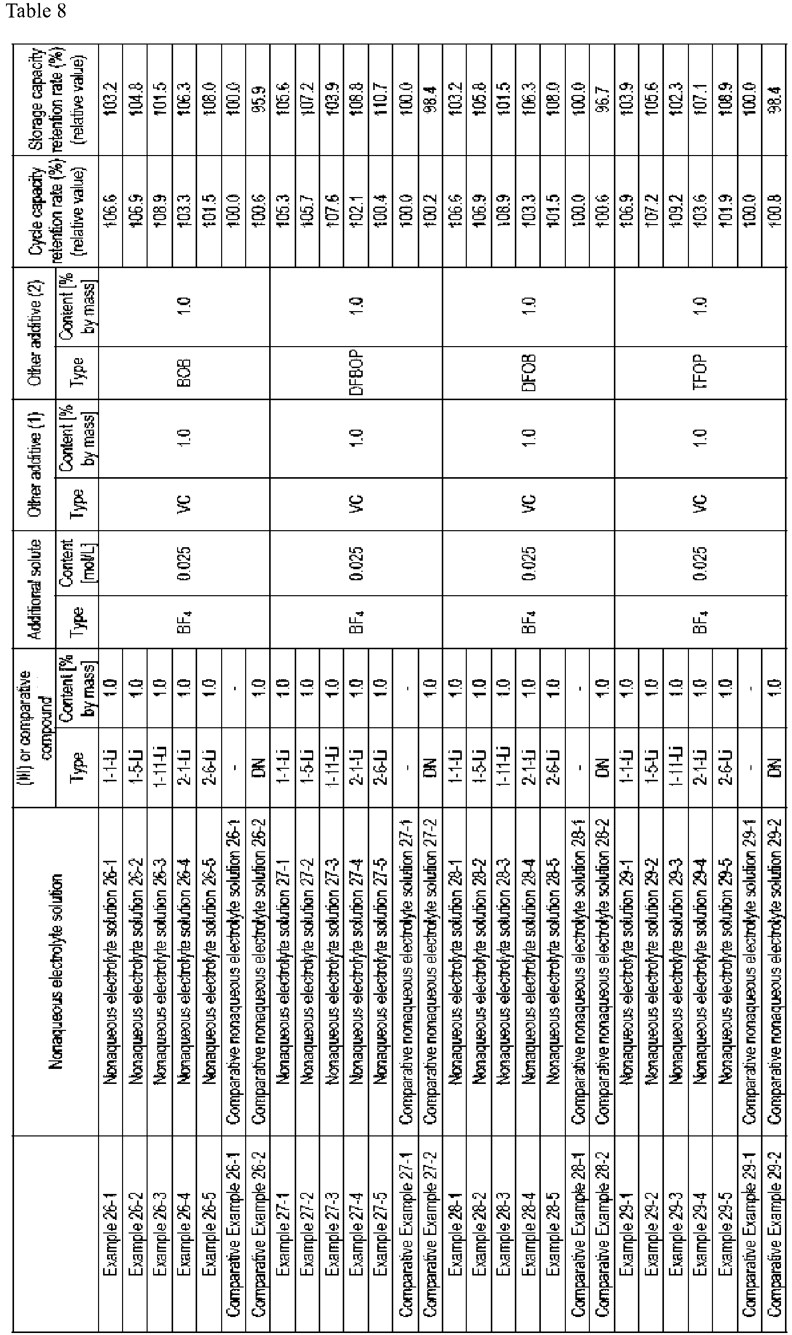

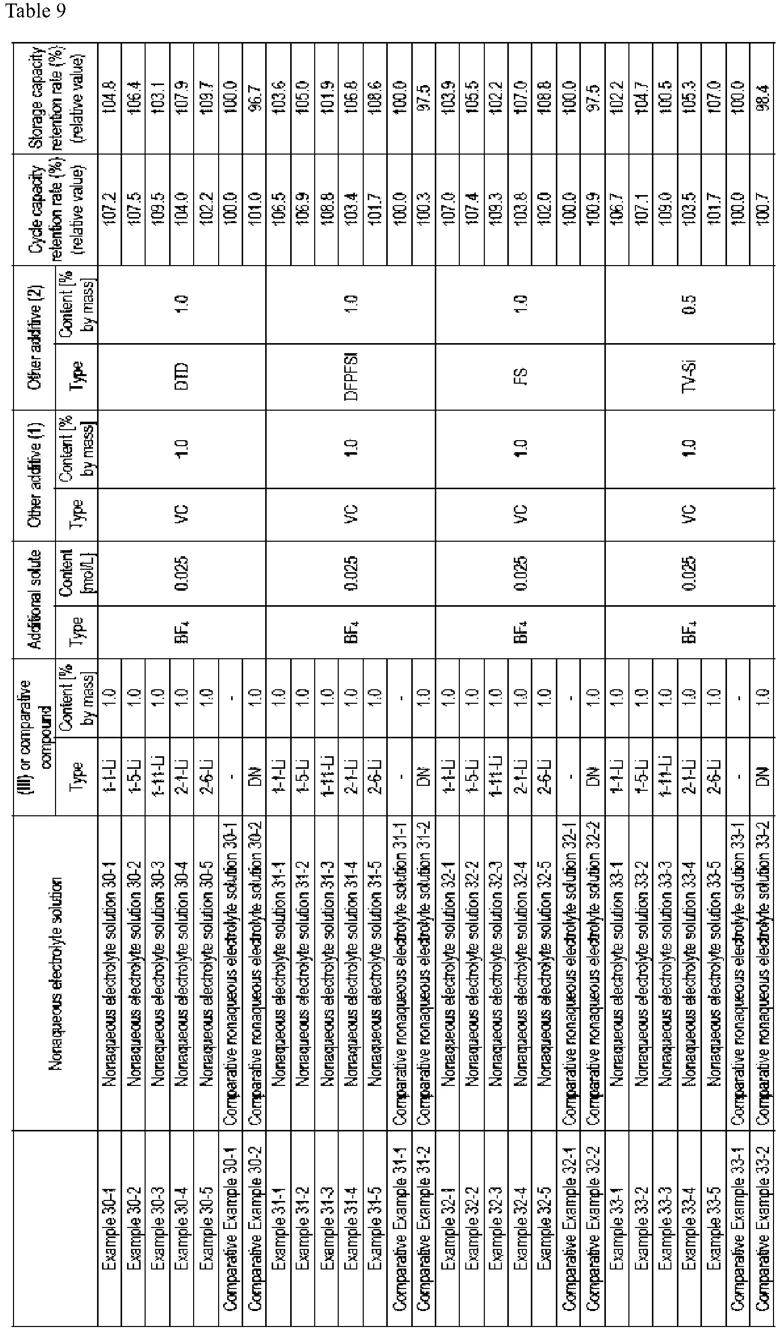

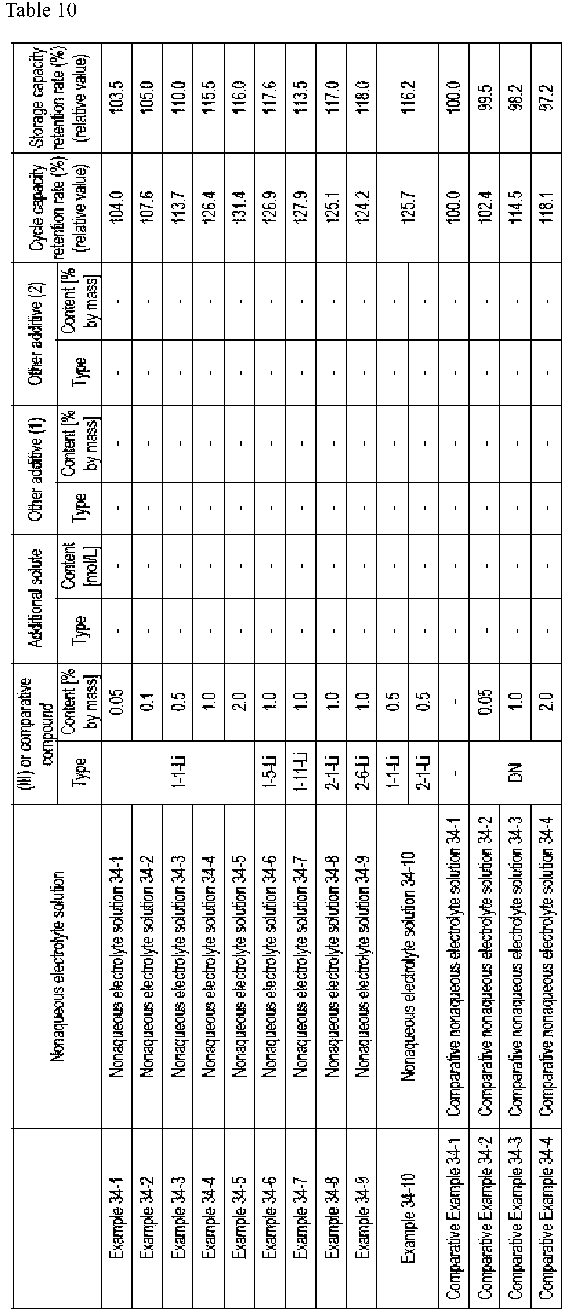

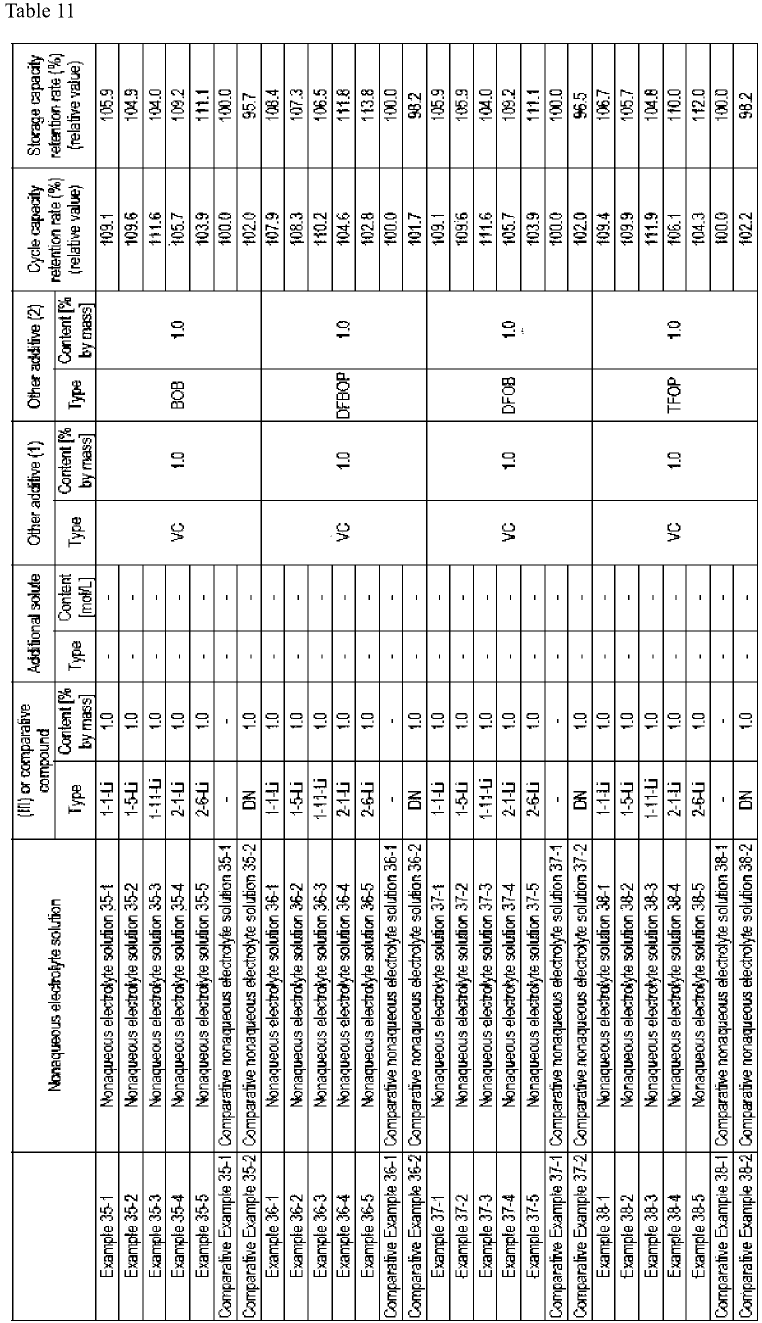

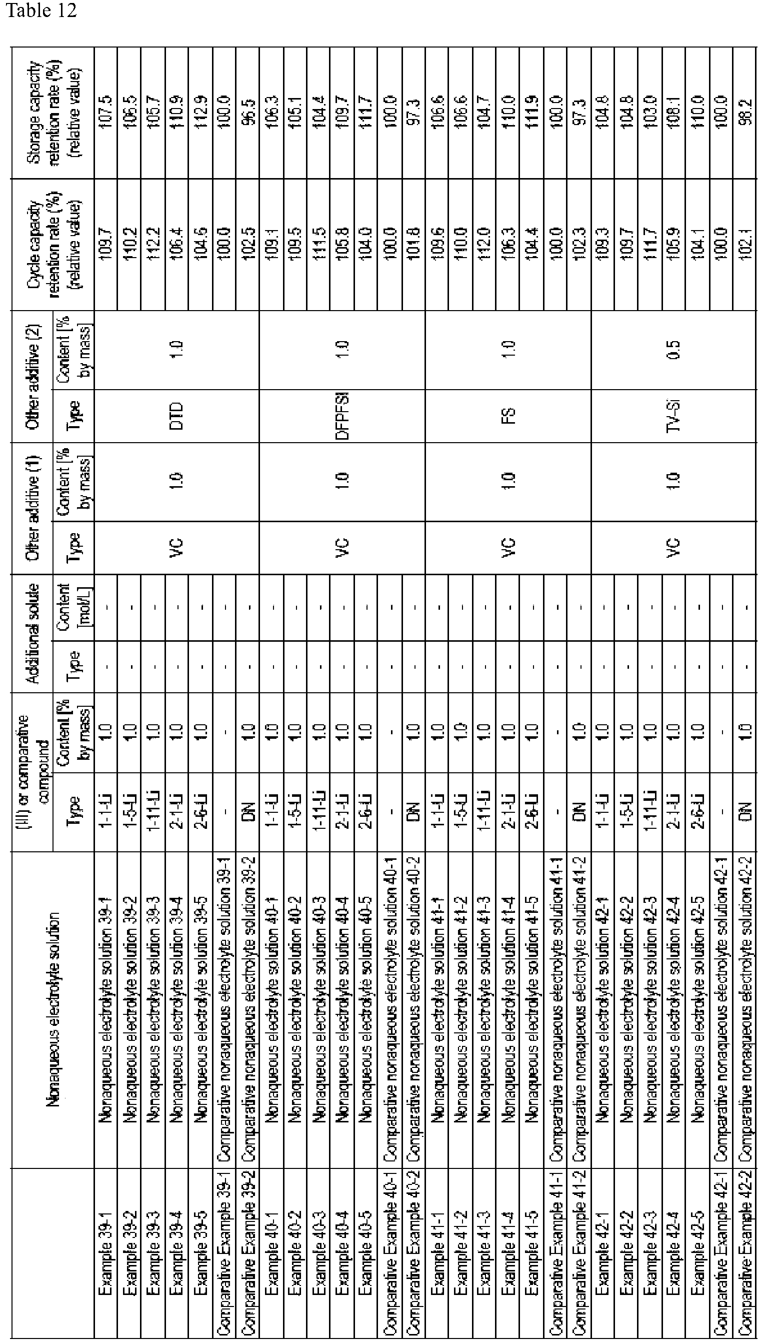

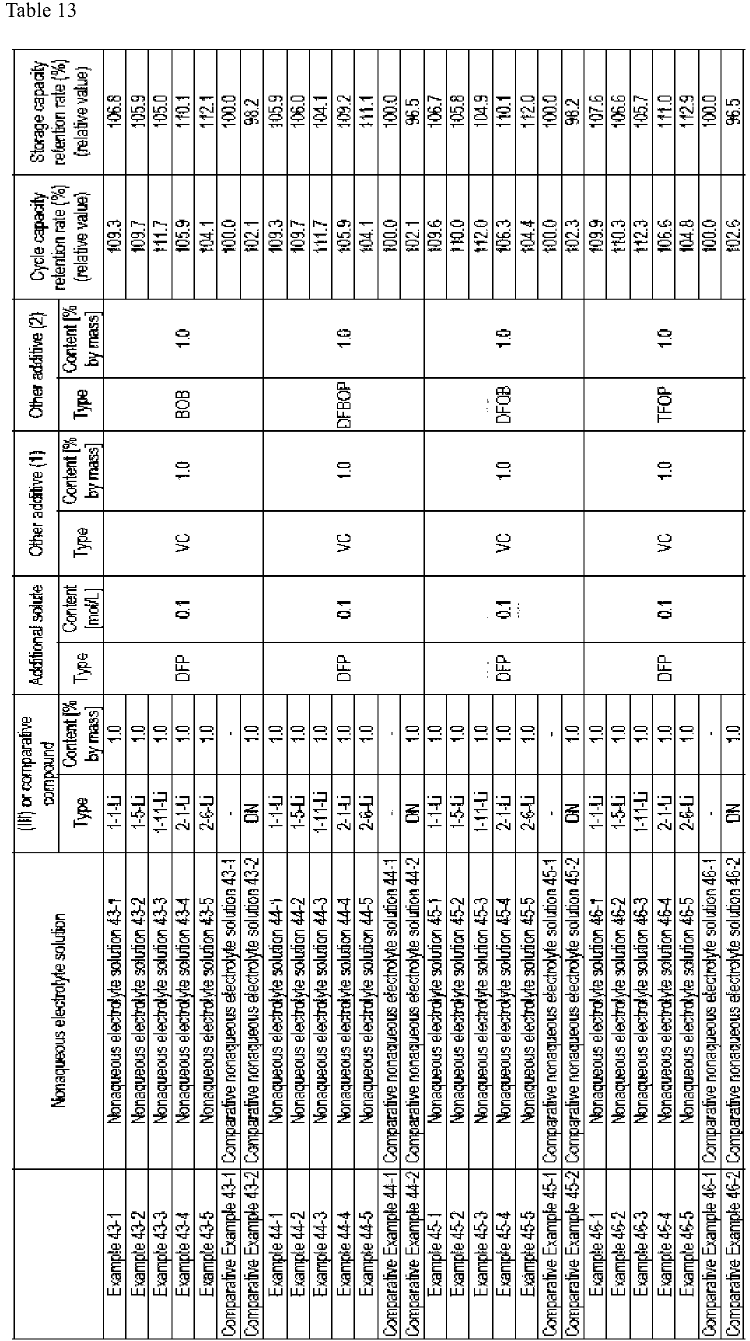

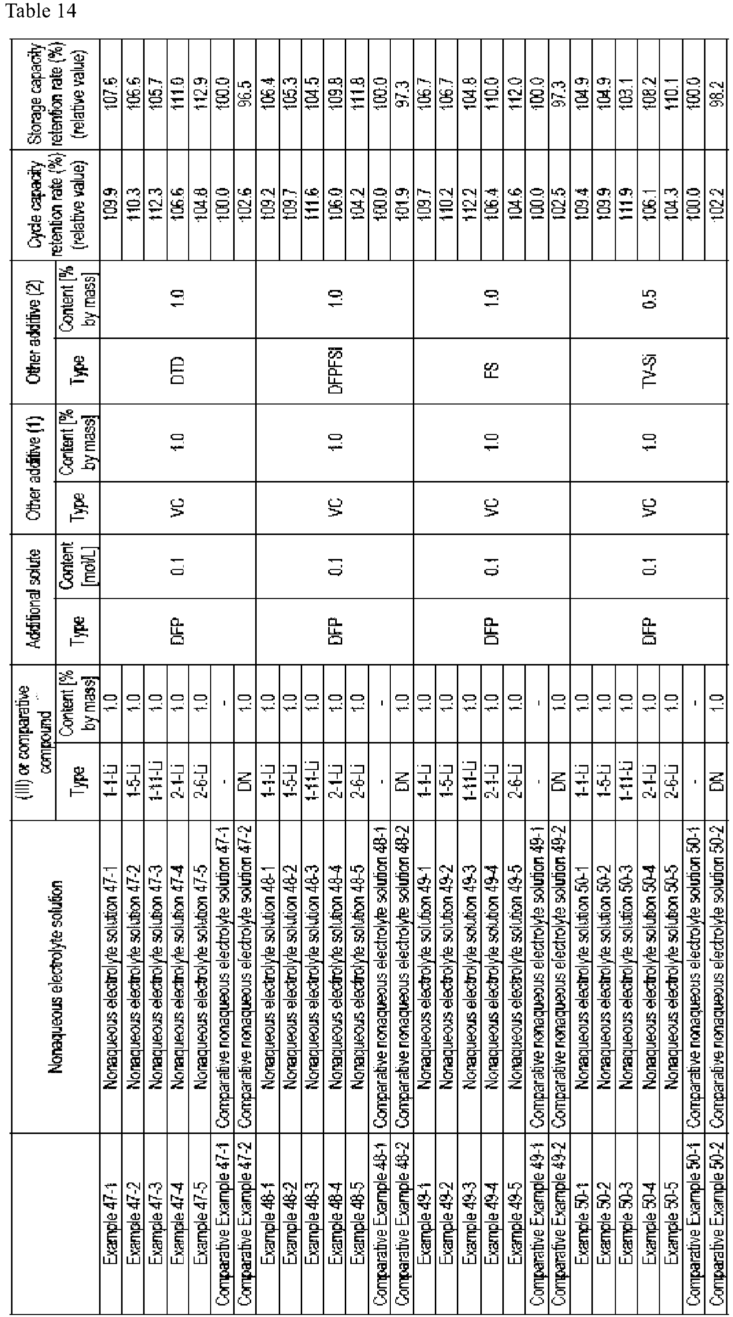

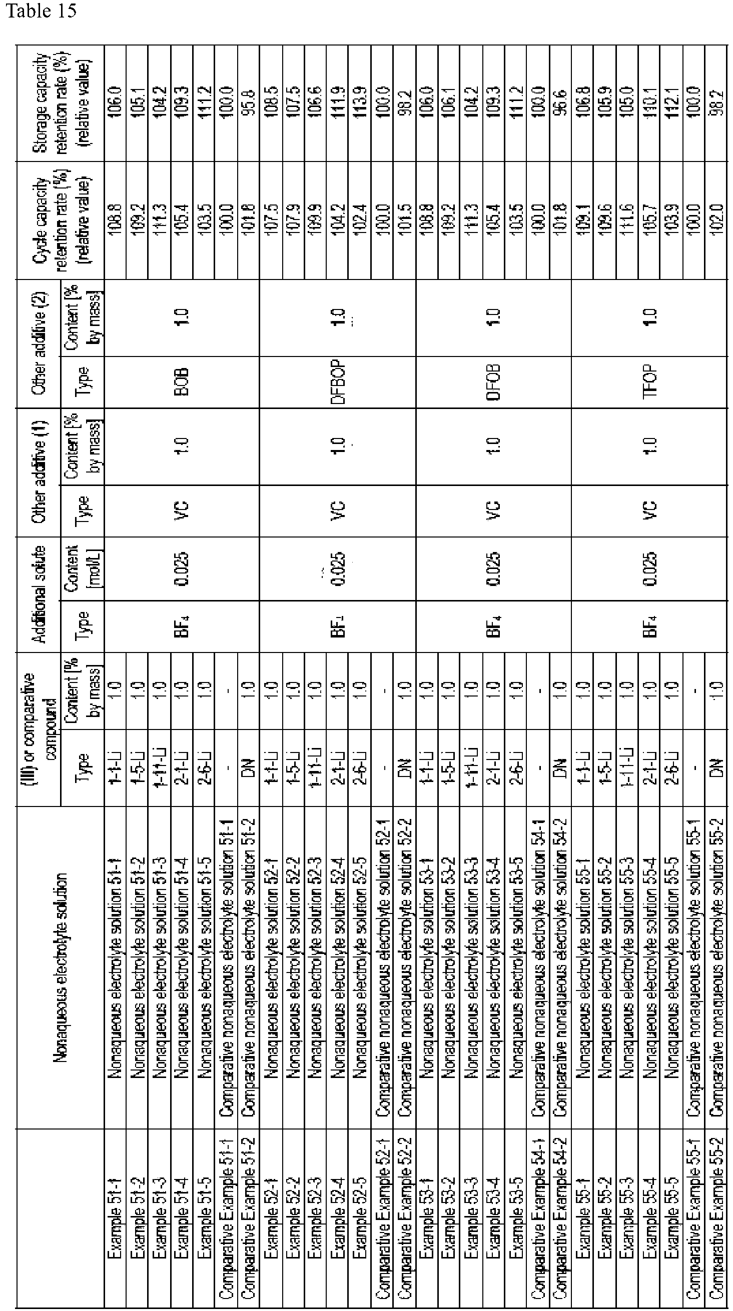

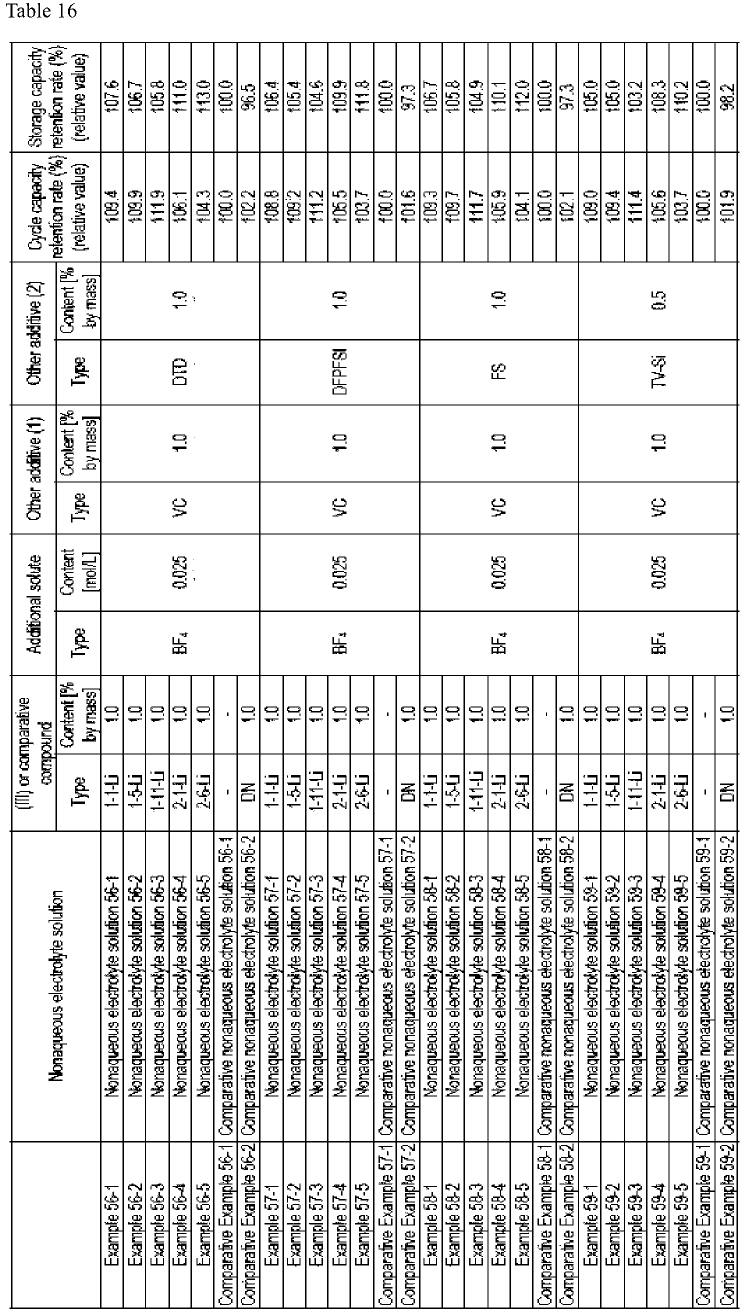

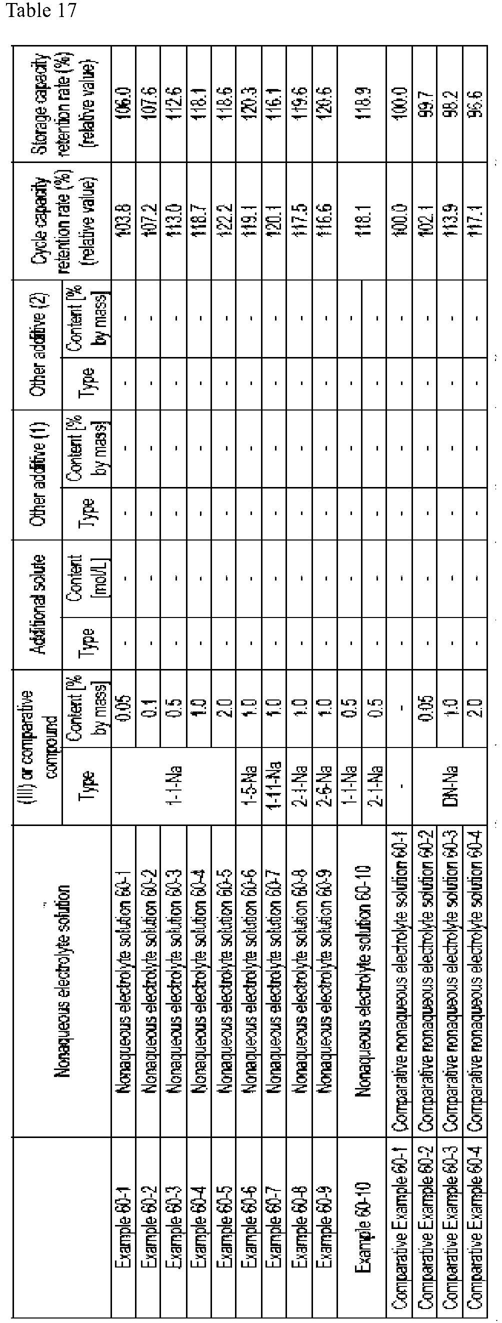

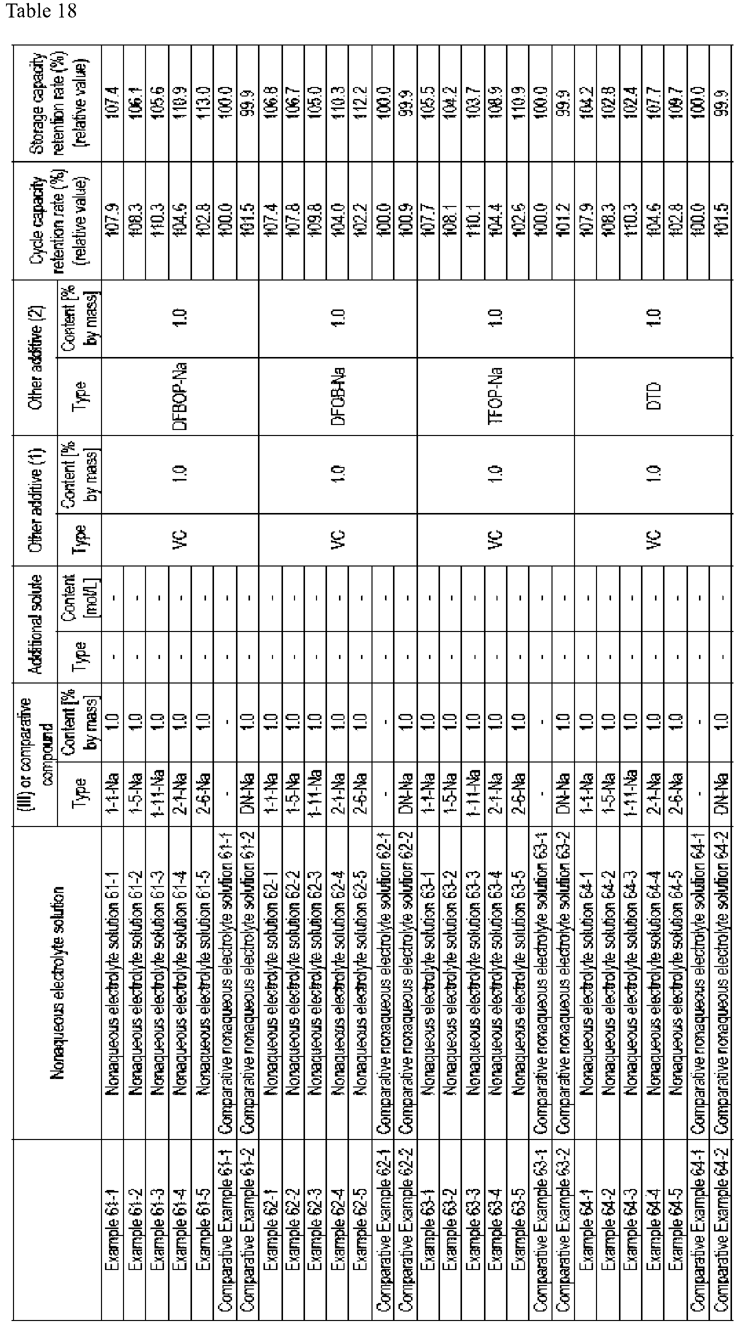

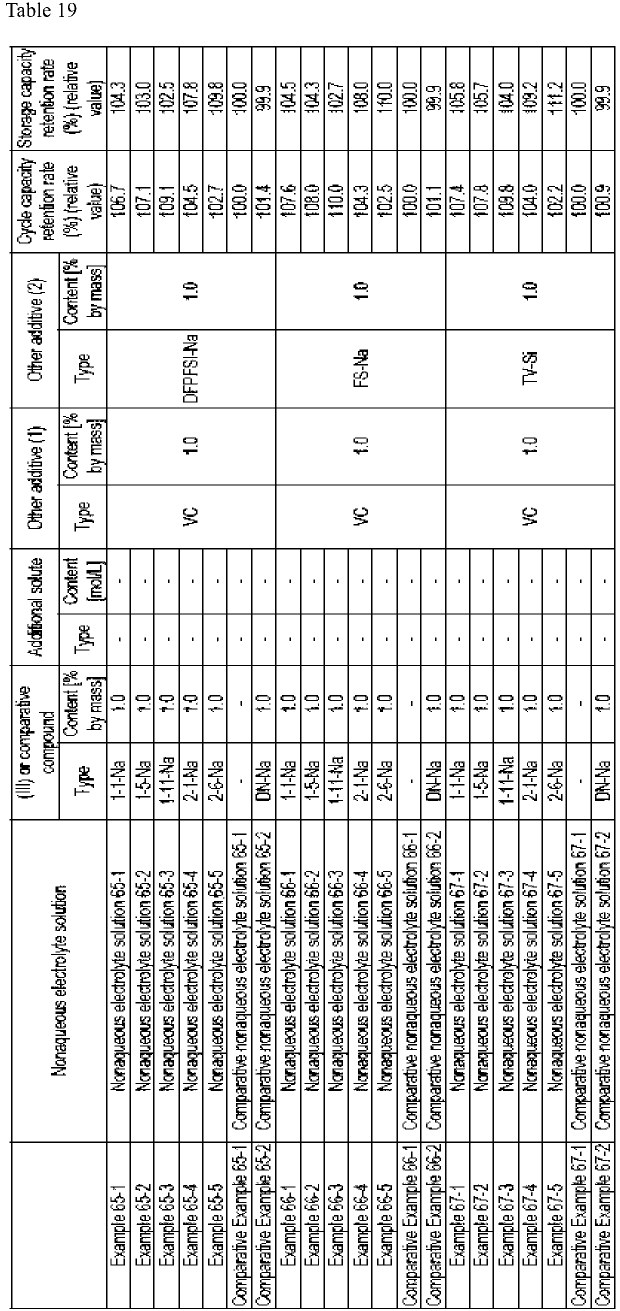

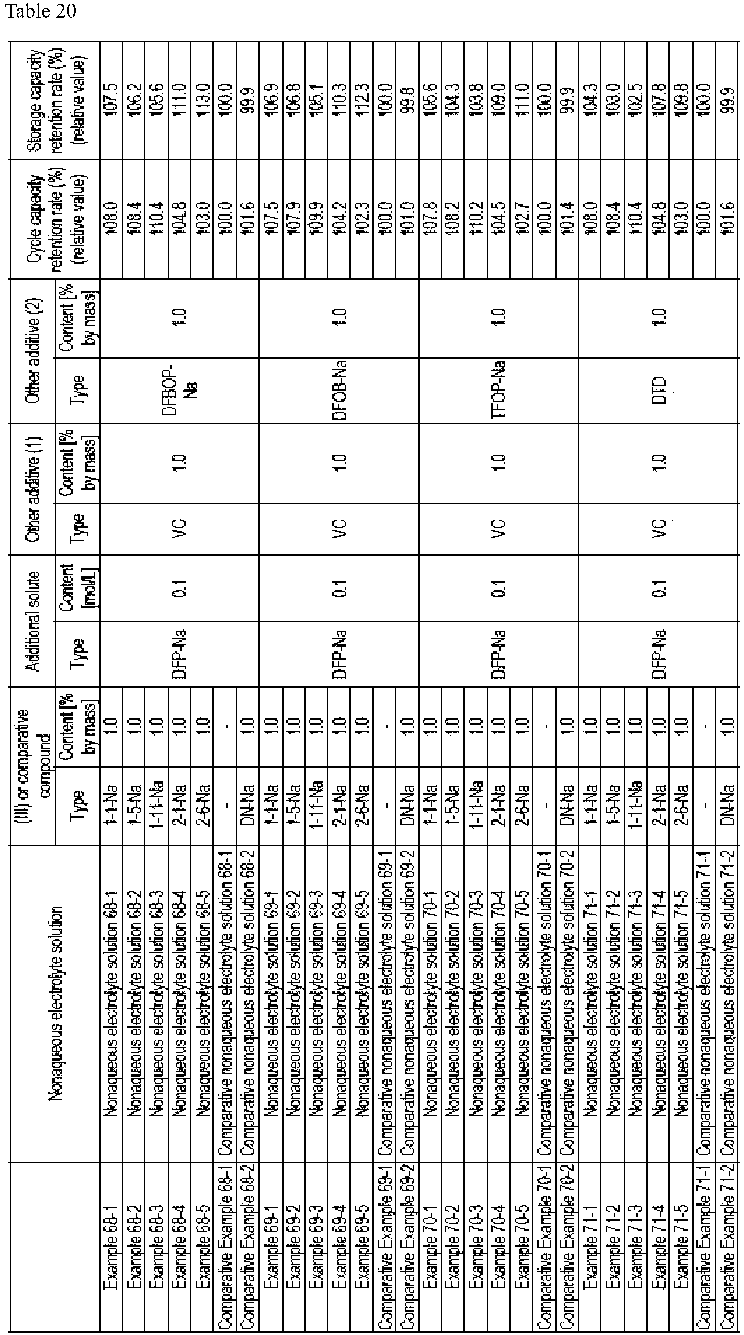

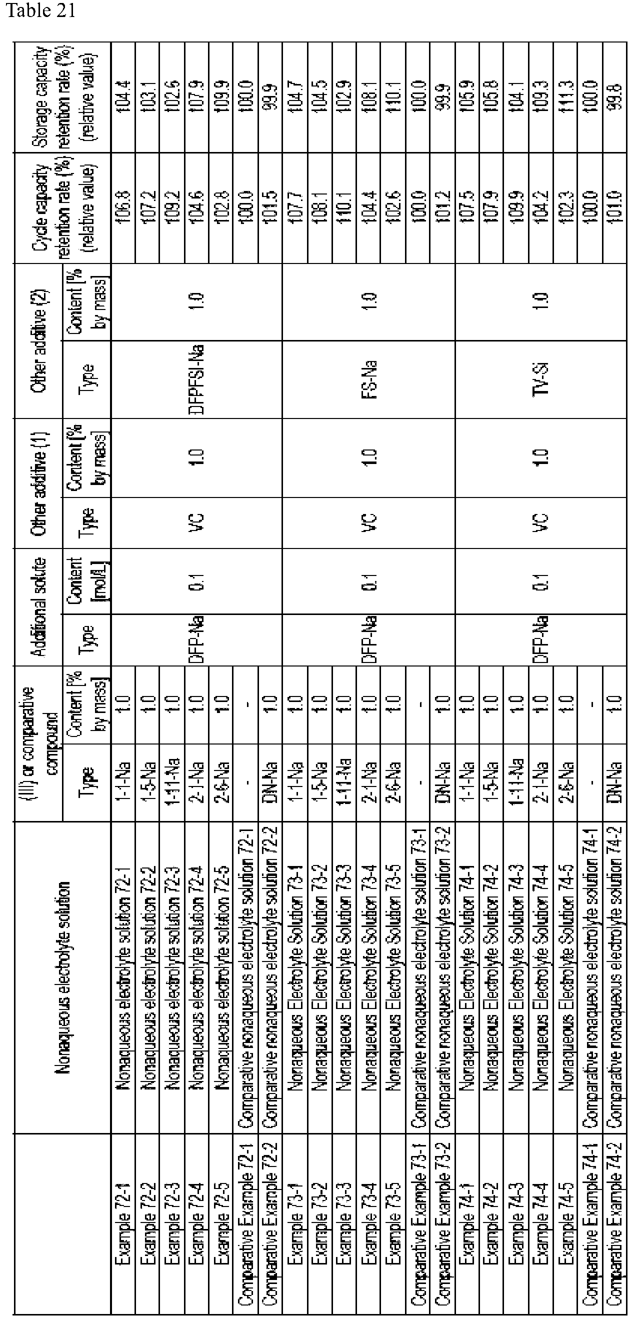

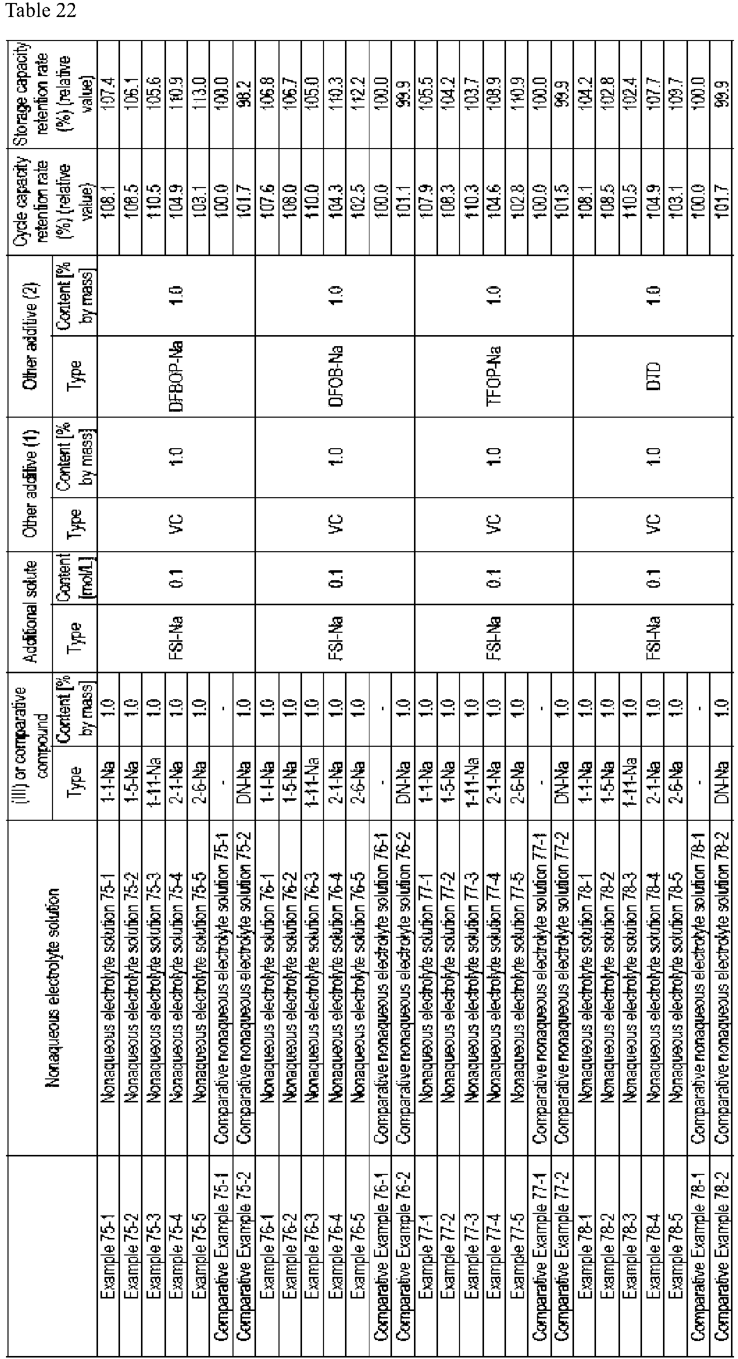

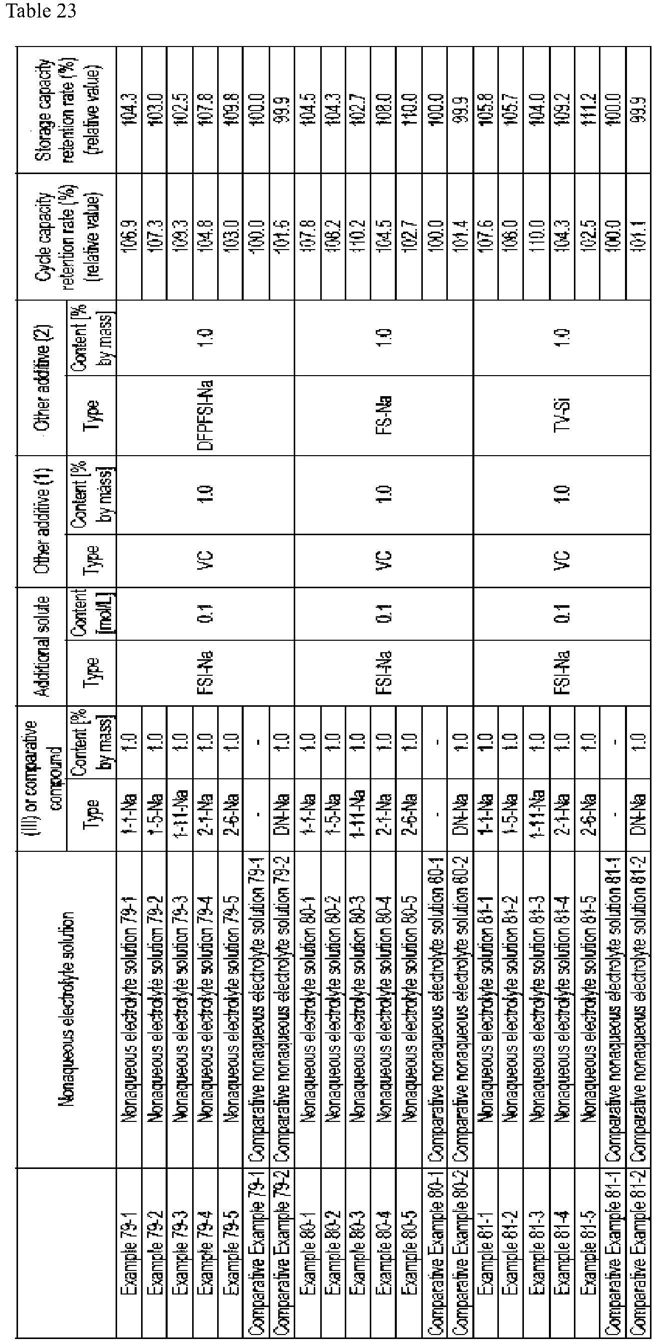

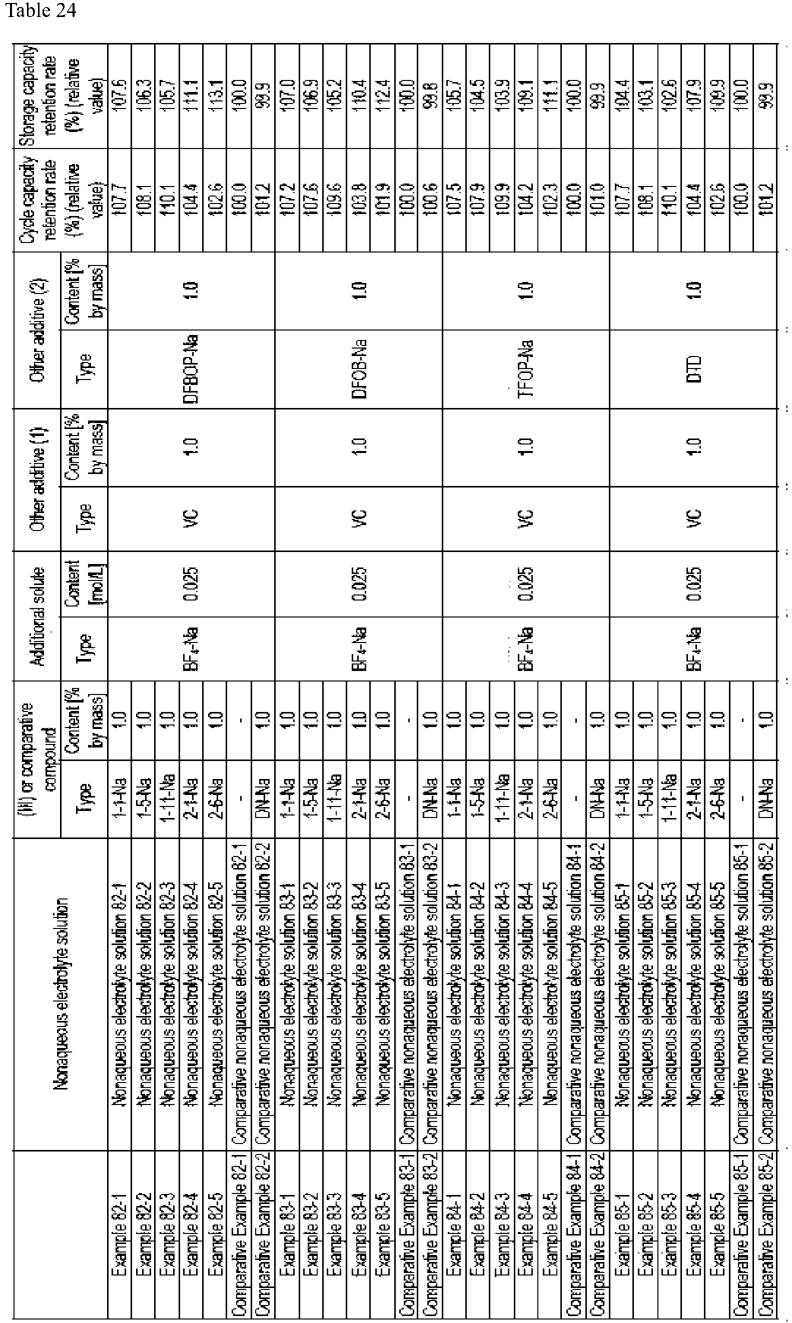

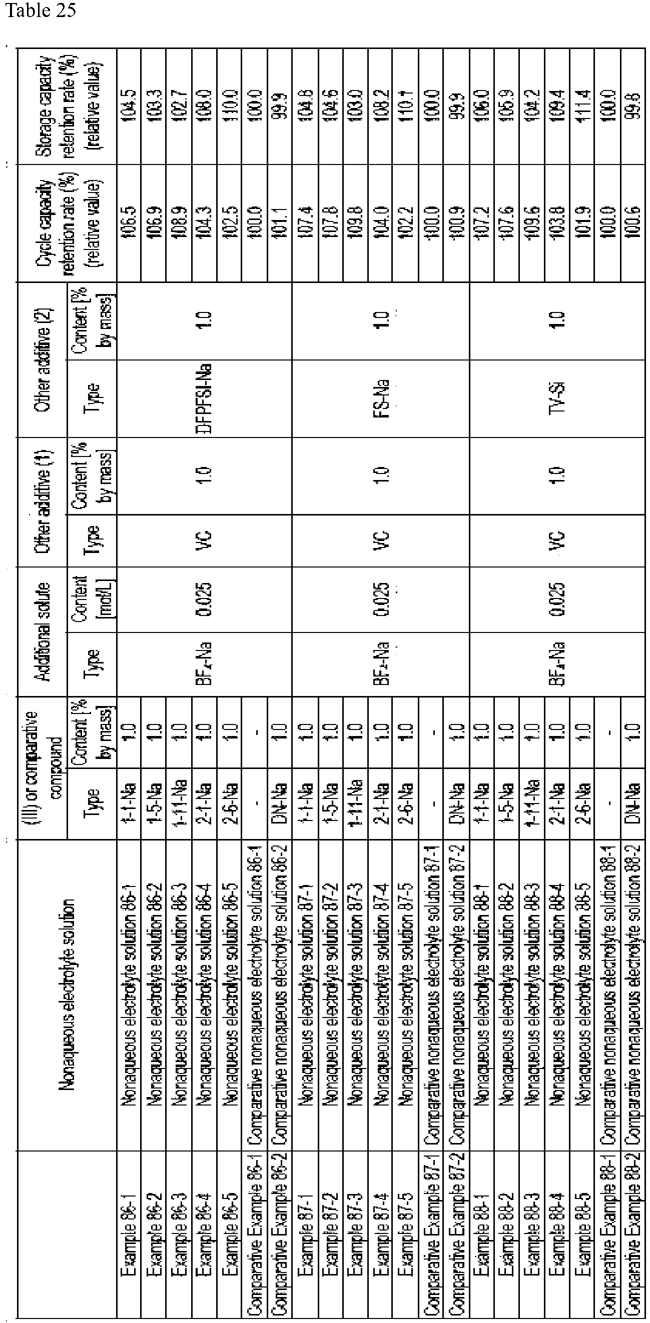

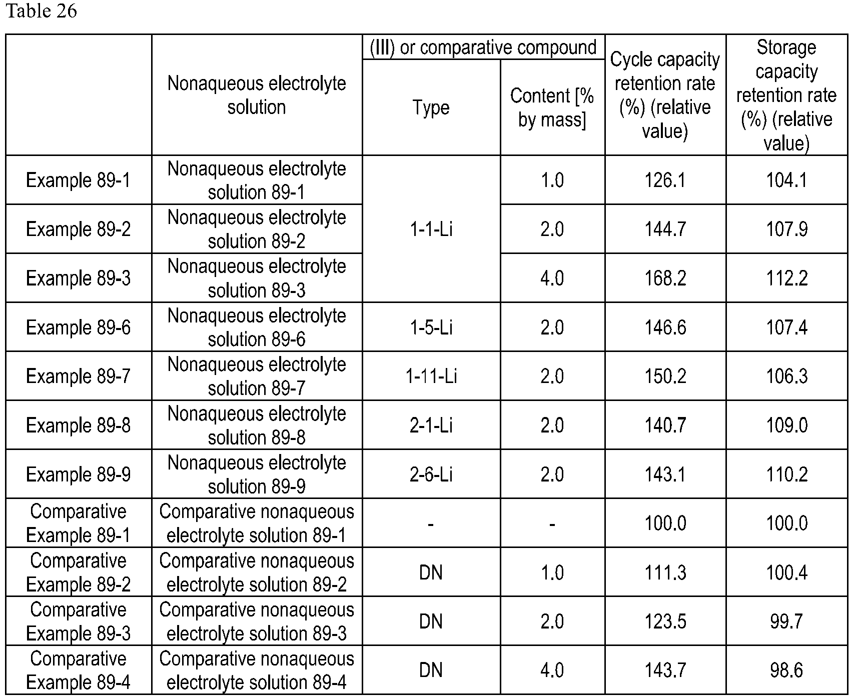

From the above results, it was found that the nonaqueous electrolyte solution battery including the nonaqueous electrolyte solution of each of Examples was more excellent in high-temperature storage characteristics than the nonaqueous electrolyte solution battery including the nonaqueous electrolyte solution of each of Comparative Examples. From comparison of Examples with Comparative Examples in which the content of (III) was the same as the content of the comparative compound in each of the nonaqueous electrolyte solutions, it was found that the cycle characteristics were more excellent in Examples.

### INDUSTRIAL APPLICABILITY

The present disclosure can provide a nonaqueous electrolyte solution capable of exhibiting excellent high-temperature storage characteristics in use of a nonaqueous electrolyte solution battery, and a method for producing the nonaqueous electrolyte solution battery. The present disclosure can provide a nonaqueous electrolyte solution battery having excellent high-temperature storage characteristics.

Although the present disclosure has been explained in detail and referring to specific embodiments, it will be apparent to a person skilled in the art that various changes and modifications can be made without departing from the spirit and the scope of the present disclosure.

The present application is based on a Japanese Patent Application (No. 2024-003378) filed on January 12, 2024, the contents of which are incorporated herein by reference.

## Claims

1. A nonaqueous electrolyte solution comprising:
(I) a solute,
(II) a nonaqueous organic solvent, and
(III) at least one compound selected from the group consisting of a compound represented by the following general formula (1) and a compound represented by the following general formula (2), 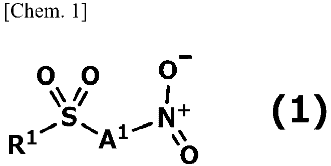
[wherein in the general formula (1), A¹ represents -N(H)- or -N⁻(M₁⁺)-,
M₁⁺ represents a metal cation or an onium cation,
R¹ represents a halogen atom, an alkyl group having 1 to 10 carbon atoms, an alkoxy group having 1 to 10 carbon atoms, an alkenyl group having 2 to 10 carbon atoms, an alkenyloxy group having 2 to 10 carbon atoms, an alkynyloxy group having 2 to 10 carbon atoms, an aryloxy group having 6 to 15 carbon atoms, a hydroxyl group, O⁻Mx⁺, or N(Rx)₂,
Mx⁺ represents a metal cation or an onium cation, and
each Rx independently represents a hydrogen atom, an alkyl group having 1 to 10 carbon atoms, an alkenyl group having 2 to 10 carbon atoms, an alkynyl group having 2 to 10 carbon atoms, or a fluorosulfonyl group, a plurality of Rx's may be the same as or different from each other, and the plurality of Rx's may be bonded to each other,] 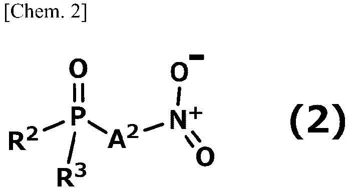
[wherein in the general formula (2), A² represents -N(H)- or -N⁻(M₂⁺)-,
M₂⁺ represents a metal cation or an onium cation,
R² and R³ each independently represent a halogen atom, an alkyl group having 1 to 10 carbon atoms, an alkoxy group having 1 to 10 carbon atoms, an alkenyl group having 2 to 10 carbon atoms, an alkenyloxy group having 2 to 10 carbon atoms, an alkynyloxy group having 2 to 10 carbon atoms, an aryloxy group having 6 to 15 carbon atoms, a hydroxyl group, O⁻My⁺, or N(Ry)₂,
My⁺ represents a metal cation or an onium cation, and
each Ry independently represents a hydrogen atom, an alkyl group having 1 to 10 carbon atoms, an alkenyl group having 2 to 10 carbon atoms, an alkynyl group having 2 to 10 carbon atoms, or a fluorosulfonyl group, a plurality of Ry's may be the same as or different from each other, and the plurality of Ry's may be bonded to each other.]

2. The nonaqueous electrolyte solution according to claim 1, wherein R¹ in the general formula (1) is a fluorine atom, a methyl group, an ethyl group, an ethenyl group, a methoxy group, O⁻Mx⁺, or N(Rx)₂.

3. The nonaqueous electrolyte solution according to claim 1, wherein at least one of R² or R³ in the general formula (2) represents a fluorine atom, a methyl group, an ethyl group, an ethenyl group, a methoxy group, O⁻My⁺, or N(Ry)₂.

4. The nonaqueous electrolyte solution according to claim 1, wherein A¹ in the general formula (1) represents -N(H)- or -N⁻(M₁⁺)-, and M₁⁺ represents a lithium ion or a sodium ion.

5. The nonaqueous electrolyte solution according to claim 1, wherein A² in the general formula (2) represents -N(H)- or -N⁻(M₂⁺)-, and M₂⁺ represents a lithium ion or a sodium ion.

6. The nonaqueous electrolyte solution according to claim 1, wherein a concentration of the (III) is 0.01 to 10% by mass with respect to a total amount of the nonaqueous electrolyte solution.

7. The nonaqueous electrolyte solution according to claim 1, wherein the (I) is at least one selected from the group consisting of LiPF₆, LiBF₄, LiSbF₆, LiAsF₆, LiClO₄, LiN(SO₂F)₂, LiAlO₂, LiAlCl₄, LiCl, and LiI.

8. The nonaqueous electrolyte solution according to claim 1, wherein the (I) is at least one selected from the group consisting of NaPF₆, NaBF₄, NaSbF₆, NaAsF₆, NaClO₄, NaN(SO₂F)₂, NaAlO₂, NaAlCl₄, NaCl, and Nal.

9. The nonaqueous electrolyte solution according to claim 1, wherein the (II) comprises at least one selected from the group consisting of a cyclic ester, an acyclic ester, a cyclic ether, an acyclic ether, a sulfone compound, a sulfoxide compound, and an ionic liquid.

10. The nonaqueous electrolyte solution according to claim 9, wherein the cyclic ester comprises a cyclic carbonate.

11. The nonaqueous electrolyte solution according to claim 10, wherein the cyclic carbonate comprises at least one selected from the group consisting of ethylene carbonate and propylene carbonate.

12. The nonaqueous electrolyte solution according to claim 9, wherein the acyclic ester comprises an acyclic carbonate.

13. The nonaqueous electrolyte solution according to claim 12, wherein the acyclic carbonate comprises at least one selected from the group consisting of ethyl methyl carbonate, dimethyl carbonate, diethyl carbonate, and methyl propyl carbonate.

14. The nonaqueous electrolyte solution according to claim 9, wherein the cyclic ether comprises at least one selected from the group consisting of tetrahydrofuran, 2-methyltetrahydrofuran, furan, tetrahydropyran, 1,3-dioxane, 1,4-dioxane, 1,3-dioxolane, and trioxane.

15. The nonaqueous electrolyte solution according to claim 9, wherein the acyclic ether comprises at least one selected from the group consisting of diethyl ether, dipropyl ether, diisopropyl ether, dibutyl ether, dimethoxymethane, trimethoxymethane, 1,2-dimethoxyethane, diethoxyethane, diethylene glycol dimethyl ether, triethylene glycol dimethyl ether, and tetraethylene glycol dimethyl ether.

16. The nonaqueous electrolyte solution according to claim 1, further comprising
at least one selected from the group consisting of cyclohexylbenzene, cyclohexyl fluorobenzene, biphenyl, 2-fluorobiphenyl, tert-butylbenzene, tert-amylbenzene, 2-fluorotoluene, fluorobenzene, difluoroanisole, vinylene carbonate, an oligomer of vinylene carbonate (a number-average molecular weight in terms of polystyrene of 170 to 5,000), vinylethylene carbonate, divinylethylene carbonate, fluoroethylene carbonate, ethynyl ethylene carbonate, trans-difluoroethylene carbonate, methyl propargyl carbonate, ethyl propargyl carbonate, dipropargyl carbonate, dimethyl vinylene carbonate, dimethyl dicarbonate, bis(1,1,1,3,3,3-hexafluoro-1-propyl) carbonate, bis(2,2,2-trifluoroethyl) carbonate, 1,6-diisocyanatohexane, maleic anhydride, succinic anhydride, 1,4-dioxane-2,6-dione, glutaric anhydride, methanedisulfonic anhydride, 1,3-propanesultone, 1,3-propenesultone, 1,4-butanesultone, 2,4-butanesultone, 1,3,2-dioxathiolane-2,2-dioxide, 4-propyl-1,3,2-dioxathiolane-2,2-dioxide, methylene methanedisulfonate, dimethylene methanedisulfonate, trimethylene methanedisulfonate, methyl methanesulfonate, methanesulfonyl fluoride, ethenesulfonyl fluoride, 1,2-ethanedisulfonic anhydride, methanesulfonic anhydride, N,N'-carbonylbis(N-methylsulfamoyl fluoride), difluoro(picolinato)borate, phenyl difluorophosphate, tripropargyl phosphate, tetrafluoro(picolinato)phosphate, (ethoxy)pentafluorocyclotriphosphazene, succinonitrile, methyldifluorovinylsilane, methylfluorodivinylsilane, dimethyldivinylsilane, trivinylmethylsilane, trivinylfluorosilane, tetravinylsilane, tris(trimethylsilyl)borate, tris(trimethylsilyl)phosphate, 1,3-dimethyl-1,3-divinyl-1,3-di(1,1,1,3,3,3-hexafluoroisopropyl)disiloxane, a fluorosulfonate salt, a trifluoromethanesulfonate salt, a pentafluoroethanesulfonate salt, a nonafluorobutanesulfonate salt, a monomethyl sulfate salt, a monoethyl sulfate salt, a bis(trifluoromethanesulfonyl)imide salt, a bis(pentafluoroethanesulfonyl)imide salt, a (trifluoromethanesulfonyl)(nonafluorobutanesulfonyl)imide salt, a (trifluoromethanesulfonyl)(pentafluoroethanesulfonyl)imide salt, a (trifluoromethanesulfonyl)(fluorosulfonyl)imide salt, a (pentafluoroethanesulfonyl)(fluorosulfonyl)imide salt, a (difluorophosphoryl)(fluorosulfonyl)imide salt, a (difluorophosphoryl)(trifluoromethanesulfonyl)imide salt, a bis(difluorophosphoryl)imide salt, a monofluorophosphate salt, a difluorophosphate salt, a tetrafluoro(malonato)phosphate salt, a tris(oxalato)phosphate salt, a difluorobis(oxalato)phosphate salt, a tetrafluorooxalatophosphate salt, a bis(oxalato)borate salt, a difluorooxalatoborate salt, a difluoro(malonato)borate salt, a tris(trifluoromethanesulfonyl)methide salt, a tris(fluorosulfonyl)methide salt, an acrylate salt, a methacrylate salt, a nitrate salt, a nitrite salt, hexafluoroisopropanol, and trifluoroethanol.

17. A nonaqueous electrolyte solution battery comprising, at least,
a positive electrode;
a negative electrode; and
the nonaqueous electrolyte solution according to any one of claims 1 to 16.

18. The nonaqueous electrolyte solution battery according to claim 17, wherein the negative electrode comprises at least one of an alkali metal, an alkali metal alloy, or a material capable of intercalating an alkali metal.

19. A method for producing a nonaqueous electrolyte solution battery comprising:
a step of injecting the nonaqueous electrolyte solution according to any one of claims 1 to 16.
